# EUROPÄISCHE PATENTSCHRIFT

(11) **EP 3 111 499 B1**
(45) Veröffentlichungstag und Bekanntmachung des Hinweises auf die Patenterteilung: **06.03.2019**
(21) Anmeldenummer: 15703480.2
(22) Anmeldetag: 22.01.2015
(51) Int. Cl.: H01M 8/0612, H01M 8/0662, H01M 8/04007, H01M 8/04119, H01M 8/0668, H01M 8/1018

(54) **BRENNSTOFFZELLENSYSTEM**
FUEL CELL SYSTEM
SYSTÈME DE PILES À COMBUSTIBLE

(30) Priorität: 22.01.2014 DE 102014100702
(43) Veröffentlichungstag der Anmeldung: 04.01.2017
(73) Patentinhaber: Siqens GmbH, 80687 München (DE)
(72) Erfinder: HARBUSCH, Volker, 81369 München (DE)
(74) Vertreter: Patronus IP Patent- und Rechtsanwälte
(86) Internationale Anmeldenummer: PCT/EP2015/051277
(87) Internationale Veröffentlichungsnummer: WO 2015/110545

(56) Entgegenhaltungen:
- WO-A2-02/37595
- DE-T5-112009 000 995
- KR-A- 20100 083 027

## Beschreibung

Die vorliegende Erfindung betrifft ein Brennstoffzellensystem.

In der DE 102 30 283 A1 ist ein Verfahren zum Reinigen der einer Brennstoffzelle für den Betrieb zuzuführenden Gase von Bestandteilen, die für den Brennstoffzellenbetrieb ungünstig sind, offenbart. Hierbei ist in einem Zuleitungskanal eines entsprechenden Gases ein Filtersystem angeordnet, das für die Abscheidung von Partikeln und Schadgasen ausgebildet ist. Anschließend werden die Gase der Brennstoffzelle zugeführt. Das Filtersystem ist derart ausgebildet, dass Partikel als gas- oder dampfförmige Bestandteile, die sich schädigend auf den Betrieb der Brennstoffzelle auswirken, abgeschieden werden. Durch die Reinigung des jeweiligen Reaktionsgases mit dem Filtersystem wird verhindert, dass sich Verunreinigungen in den Zuleitungskanälen, in Fördermitteln und in der Brennstoffzelle selbst ablagern, die die Funktion der Brennstoffzelle beeinträchtigen oder das Schadgase unerwünschte Reaktionen in der Brennstoffzelle bewirken.

Aus der DE 101 267 54 B4 geht ein Verfahren zum Betrieb von Kohlenwasserstoffreformen in Brennstoffzellsystemen hervor. Gemäß dem Verfahren ist eine Hochtemperatur-Shiftstufe und/oder eine Niedertemperatur-Shiftstufe mehrstufig ausgeführt. Zwischen den Shiftstufen werden weitere Kühlstufen zur Temperaturerniedrigung des Reformatgases angeordnet. Zur Optimierung der Konvertierung von Kohlenmonoxid wird ein Bereich um die maximale theoretische Reaktionsgeschwindigkeit der CO-Konvertierung vorgegeben. Das Volumen der Shiftstufen ist derart ausgelegt, dass die zwischen Ein- und Ausgang der Shiftstufen ablaufende CO-Konvertierung mit einer Reaktionsgeschwindigkeit abläuft, welche sich innerhalb des vorgegebenen Bereichs befindet.

Aus der WO 97/50140 geht eine Direktmethanolbrennstoffzelle (DMFC) mit einem Verdampfer hervor. Im Verdampfer werden die beiden Bestandteile, Wasser und Methanol, der Brennstofflösung über den Siedepunkt hinaus erhitzt und anschließend der Brennstoffzelle zugeführt.

In der DE 29 27 655 C2 sind ein Verfahren einer elektrochemischen Brennstoffzelle und eine Reformierung zur Durchführung des Verfahrens beschrieben. Hierbei ist vorgesehen, dass ein kohlenwasserstoffhaltiges Gas neben dem mit der Brennstoffzelle in Verbindung stehenden Strömungsweg einem weiteren Strömungsweg zugeführt wird, der von der Elektrode und dem Elektrolyten isoliert ist. Dieser weitere Strömungsweg steht in wärmeleitender Verbindung mit einer wärmeübertragenden Oberfläche. In diesem weiteren Strömungsweg wird das kohlenwasserstoffhaltige Gas über einen Katalysator geleitet, der die endotherme Reformierung des Kohlenwasserstoffgehaltes des Gases fördert, um die Brennstoffzelle zu kühlen.

Aus der DE 199 45 667 C2 geht eine Brennstoffzelle und ein Verfahren zu deren Betrieb hervor. Die Brennstoffzelle umfasst einen Reformer mit einem Reformerraum und eine Membran-Elektronen-Einheit mit einer Anodenkammer, die sich an die Elektrode mit anodischer Beschichtung anschließt. Die Anodenkammer ist derart ausgebildet, dass die benachbarte Elektrode der Membran-Elektroden-Einheit (MEA) im Anschluss an die anodische Beschichtung, die für die Umsetzung von Methanol als Brennstoff und von Wasserstoff als Brennstoff geeignet ist, eine zweite Beschichtung aufweist. Diese dient als Reformierkatalysator zur Reformierung von Methanol, um Wasserstoff, der als Brennstoff dient, bereitzustellen.

In der DE 196 46 579 C2 ist ein Hochtemperatur-Brennstoffzellenstapel (Festoxidbrennstoffzelle) beschrieben. Dieser Brennstoffzellenstapel umfasst einen zusätzlichen Brenngaskanal der innerhalb der Brennstoffzellen des Brennstoffzellenstapels angeordnet ist. Der Brenngaskanal weist Mittel zur Reformierung des Brenngases auf und mündet in einen Brenngaselektrodenraum. Im Bereich des Abgasaustritts aus dem Anodenbrenngaselektrodenraum ist eine Öffnung angeordnet, die derart in den zusätzlichen Brenngaskanal mündet, dass überdiese Öffnung Produktwasser dem Mittel zur Reformierung des Brenngases zuführbar ist. Durch die Verbindung zwischen Anode und Reformerraum (Brenngaskanal) kann somit Methanol bevor es in die Anode gelangt zu Wasserstoff reformiert werden.

In der WO 2010/066900 ist eine Befeuchtungseinheit zum Bereitstellen eines Brennstoff- und Wasserdampfenthaltenden Trägergases zur Versorgung einer Brennstoffzelle offenbart. Die Befeuchtungseinheit umfasst einen Befeuchtungsraum, der zum Aufnehmen einer brennstoffenthaltenden Flüssigkeit ausgebildet ist, einen in den Befeuchtungsraum mündenden Einlass zum Zuführen einer Brennstoffenthaltenden Flüssigkeit, einen weiteren in den Befeuchtungsraum mündenden Einlass zum Zuführen eines Trägergases, derart dass das Trägergas im Befeuchtungsraum mit der Flüssigkeit in Kontakt steht. Weiterhin ist ein Auslass zum Ausgeben des gasförmigen Brennstoffes enthaltenden Trägergases vorgesehen, wobei eine Steuereinrichtung vorgesehen ist, die die Brennstoffenthaltende Flüssigkeit im Befeuchtungsraum auf einer Temperatur unterhalb ihres Siedepunkts einstellt. Die Steuereinrichtung ist derart ausgebildet, dass eine Regelung der Dampfdrücke vom Brennstoff und Wasserdampf durch Abstimmung von Brennstoffkonzentration und Temperatur der Brennstoffenthaltenden Flüssigkeit erfolgt.

In der DE 10 2011 015 824 A1 ist ein Brennstoffzellensystem für ein Luftfahrzeug beschrieben. Bei diesem Brennstoffzellensystem soll vorteilhaft sein, dass die Lebensdauer eines Reformers durch Verwendung einer Reinigungseinheit verlängerbar ist. Die Reinigungseinheit ist die zwischen dem Reformer und einer Brennstoffzelle 5 angeordnet. Mittels der Reinigungseinheit sollen Verunreinigungen abgetrennt werden, die in dem im Reaktor erzeugten, Wasserstoff enthaltenden, Gas enthalten sind (insbesondere Restbrennstoff, durch unvollständige Oxidation der Kohlenwasserstoffe gebildete Produkte, wie Alkohole oder durch Cracken erzeugte Kohlenwasserstoffe kürzerer Kettenlänge). Weiterhin umfasst das System eine Heizungseinrichtung, um dem Reformer die nötige Energie zur Erzeugung eines Wasserstoff enthaltenden Gases zuzuführen. Ein Brenner ist mit der Heizeinrichtung thermisch gekoppelt und wird mit synthetischem Brennstoff aus einem Brennstofftank betrieben. Das Brennstoffzellensystem soll mit einem synthetischen Brennstoff betrieben werden, der aus einer Biomasse hergestellt wurde. Vorzugsweise soll beim Reformieren des synthetischen Brennstoffs der Wasserstoff unter Zufuhr eines geeigneten Oxidationsmittels wie Luft oder Wasser erzeugt werden. Bei einer alternativen Ausführungsform ist die Erzeugung von Wasserstoffgas durch eine partielle Dehydrierung vorgesehen. Bei dieser partiellen Dehydrierung entsteht kein Synthesegas, da kein Oxidationsmittel im Reaktionsgemisch vorhanden ist. Stattdessen entsteht beim Reformieren des Brennstoffs ein dehydrierter Restbrennstoff, der in einer zwischen dem Reformer und der Reinigungseinheit angeordneten Kondensationsvorrichtung von dem Wasserstoff enthaltenden Gas abgetrennt werden kann. Dieser Restbrennstoff kann beispielsweise dem Brenner zugeführt werden.

Aus der DE 601 16 602 T2 geht ein Brennstoffzellensystem hervor. Gemäß diesem Brennstoffzellensystem ist vorgesehen aus einem Faulgas ein Wasserstoff enthaltendes Gas zum Betrieb der Brennstoffzelle zu verwenden, um ein Brennstoffzellensystem mit erhöhtem Wirkungsgrad bereitzustellen. Das Faulgas soll in einem Methanfermentierungsabschnitt aus organischer Materie gewonnen werden. Im Methanfermentierungsabschnitt werden Methangas und Kohlendioxid erzeugt. Weiterhin umfasst das System einen alkalischen Absorptionsabschnitt, wobei das Gas, das den alkalischen Absorptionsabschnitt durchlaufen hat, zu einem Wasserstoffherstellungs- bzw. Reformierungsabschnitt gelangt. Im Wasserstoffherstellungsabschnitt findet die Reformierung statt, bei der Wasserstoff erzeugt wird. Nach dem Reformierungsabschnitt ist ein Shift-Reaktionsabschnitt vorgesehen, auf den ein selektiver Oxidationsabschnitt folgt. Das daraus erzeugte Wasserstoff enthaltende Gas wird dann einer Brennstoffzelle zugeführt. Die im Brennstoffzellenstapel erzeugte Wärme soll dem Methanfermentierungsabschnitt und dem alkalischen Absorptionsabschnitt zuführbar sein, um diese mit Wärme zu versorgen.

In der EP 1 414 092 B1 ist eine Feststoffoxidbrennstoffzelle mit integriertem Luft/Brennstoffverteilersystem offenbart. Einem Brennstoffzellenstapel 10 dieses System wird entsprechend Reformatgas und Sauerstoff zugeführt. Die Zellen dieses Brennstoffzellenstapels sind in Reihe geschaltet. Gemäß einem derartigen System wird Brennstoff aus einem Vorratsbehälter 96 einem Verdampfer zugeführt und verdampft. Dieser Brennstoff enthaltende Dampf wird anschließend einem Reformer zugeführt, in dem der Brennstoff im Wesentlichen in Wasserstoff und CO reformiert wird. Das Reformat wird anschließend den Anoden zweier Brennstoffzellenstapel zugeführt. Hierbei ist vorgesehen, dass unverbrauchter Brennstoff aus dem Anodenauslass zu einem Nachbrenner 66 abgeführt wird, wo er mit Kathodenabluft und frischer Luft verbrannt wird. Die dabei erzeugten heißen Brenngase 112 werden einem Reinigungskatalysator des Reformers zugeführt. Der Abfluss des Katalysators wird durch Wärmetauscher geführt, um die zugeführte Kathoden- und Anodenluft (die dem Verdampfer zugeführte Luft) zu erwärmen. Weiterhin ist eine Einrichtung vorgesehen, die zwischen dem Reformer und dem Anodeneinlass geschaltet ist, in der ein sauerstoffreduzierendes Mittel angeordnet ist, z. B. ein Nickelmetallschaum, ein Nickeldraht oder ein Nickelnetz, um Sauerstoff unter Bildung von Nickeloxid zu binden und aus dem Anodenfluid abzutrennen.

Aus der DE 197 54 013 C2 geht eine Vorrichtung zur Wasserdampfreformierung von Kohlenwasserstoff hervor. Diese umfasst einen Verdampfer, eine dem Verdampfer nachgeschaltete Reformierungseinheit mit einer Vorreformierungsstufe und einem Hauptreformer. Dem Hauptreformer ist eine CO₂-Entfernungseinheit mit einer CO-Shiftstufe und/oder einer CO-Oxidationsstufe nachgeschaltet. Weiterhin ist eine katalytische Brennereinheit vorgesehen, wobei eine erste katalytische Brennereinheit und eine zweite katalytische Brennereinheit entsprechend den Verdampfer und den Hauptreformer mit Wärme versorgen sollen. Der Ausgang der CO-Entfernungseinheit ist mit dem Eingang der katalytischen Brennereinheit verbunden. Die Vorreformierungsstufe ist mit der CO-Shiftstufe oder der CO-Oxidationsstufe wärmeleitend verbunden. Mit diesem System soll die Kaltstartphase eines derartigen Reformers möglichst kurz gehalten werden, um in einen warmgelaufenen Normalbetrieb übergehen zu können.

In der US 7,763,216 B2 sind ein chemischer Reaktor und ein Brennstoffzellensystem beschrieben. Dabei ist vorgesehen einem mikrochemischen Reaktor bzw. einem Reformer Brennstoff zuzuführen. Im Reformer wird der flüssige Brennstoff verdampft, wobei in einem weiteren Abschnitt Kohlenmonooxid aus dem dampfförmigen Brennstoff bzw. aus dem reformierten Brennstoff entfernt wird. Der in dem Reformer erzeugte Brennstoffdampf wird anschließend einer Brennstoffzelle zugeführt.

In der US 2013/0244126 A1 ist ein Hochtemperaturbrennstoffzellensystem beschrieben. Dieses System umfasst einen Reformer, um ein Reformatgas für eine SOFC bereitzustellen. Hierbei ist vorgesehen die Abwärme des Brennstoffzellenstapels zu verwenden, um das zu reformierende Brennstofffluid vorzuwärmen, bevor dieses reformiert wird. Weiterhin soll die Abwärme des Brennstoffzellenstapels auch verwendbar sein, um die dem Brennstoffzellenstapel zugeführte Luft vorzuwärmen. Es kann ein zweiter Wärmetauscher vorgesehen sein, um die zuvor erhitzte Luft dazu zu verwenden, um das dem Reformer zugeführte Brennstofffluid über den zweiten Wärmetauscher vorzuwärmen.

Das Dokument US 2011/0189567 offenbart ein Brennstoffzellensystem, das einen Hochtemperaturbrennstoffzellenstapel, wie z. B. eine SOFC oder eine MCFC umfasst. Weiterhin ist bei diesem Brennstoffzellensystem eine thermische Kopplung des Brennstoffzellenstapels mit einem Reformer vorgesehen. Der Reformer soll dabei in den Brennstoffzellenstapel derart integriert sein, dass mittels der Abwärme des Brennstoffzellenstapels die endotherme Reaktion im Reformer unterstützt wird. Dabei können der Reformer und der Brennstoffzellenstapel entweder in einem thermisch abgeschlossenen Raum angeordnet sein und/oder in thermischem Kontakt stehen oder es können Mittel zur Wärmeübertragung, wie z. B. ein wärmeleitendes Material oder entsprechende Leitungen vorgesehen sein, um den Brennstoffzellenstapel thermisch mit dem Reformator zu verbinden.

In der DE 11 2009 000995 T5 ist ein Brennstoffzellensystem offenbart. Dieses Brennstoffzellensystem soll Schwingungen und Geräusche, die im System entstehen, reduzieren können. Das Brennstoffzellensystem umfasst eine Brennstoffzelle (SOFC) und einen Reformer zum Erzeugen von Brennstoffgas (Wasserstoffgas). Der Reformer besteht aus einem Brenner, einem Reformierabschnitt, einem Kohlenmonoxid-Shift-Reaktionsabschnitt und einem Kohlenmonoxid-Auswahloxidations-Reaktionsabschnitt.

Aus der WO 02/37595 A2 geht eine Unterdruckkammer für eine Brennstoffzellenanlage hervor. Gemäß dieser Brennstoffzellenanlage ist vorgesehen, dass zumindest ein Reformer und eine Brennstoffzelle in einer Unterdruckkammer angeordnet sind und hierbei von der für die Reaktion benötigten Luft umströmt werden, wodurch Gase aus den Komponenten der Brennstoffzellenanlage nicht in die Umgebung gelangen können und stattdessen im System verbleiben. Hierbei soll Konvektivwärme von den Komponenten auf die Luft übertragen und genutzt werden. Dies soll insbesondere dadurch erreicht werden, dass direkt im Brennstoffzellenstapel Wärme auf einen Kühlkreislauf übertragen wird. Wobei dies Wärme dann zum Vorheizen von Erdgas welches einem Reformer zugeführt wird genutzt werden soll. Weiterhin soll die thermische Energie, die im Abgas des Nachbrenners enthalten ist, auf einen Heizkreislauf übertragen werden, um diese zu nutzen. Eine entsprechende Brennstoffzellenanordnung umfasst einen Brennstoffzellenstapel, einen Reformer inklusive CO-Feinreinigung, einen Wärmetauscher, einen internen Kühlkreislauf inklusive Pumpe, einen katalytischen Nachbrenner, ein Gebläse, ein Leitungssystem, das die Komponenten miteinander verbindet, und eine Unterdruckkammer.

In der KR 2010 0083027 A ist ein Brennstoffzellensystem beschrieben, das einen Reformer, einen Brenner, eine Schwefelentfernungseinrichtung, die Brenngas erzeugt indem der Schwefel aus dem reformierten Gas entfernt wird, einen Verbundwärmtauscher, der das Brennstoffgas und die Luft aufheizt, und eine Festoxidbrennstoffzelle zum Erzeugen von Strom umfasst. Weiterhin ist ein katalytischer Brenner vorgesehen, der Verbrennungsgas durch Verbrennen von Abgas aus dem Brennstoffzellenstapel erzeugt.

Bei Reformierungsprozessen, insbesondere bei einer Dampfreformierung bei niedrigen Temperaturen von in etwa 190 °C und insbesondere von 160 °C bis 180 °C liegt der Umsetzungsgrad des Reformats nicht bei 100% bei einer hinsichtlich Größe und Bauvolumen geeigneter Auslegung des Reformers eher zwischen 50 - 80%. Die Dampfreformation bei niedrigen Temperaturen wird insbesondere angewendet bei Brennstoffzellen mit einer internen Reformierung. Unter einer internen Reformierung ist eine Reformierung wie in der DE 196 46 579 C2 bzw. der DE 199 45 667 C2 beschrieben zu verstehen, bei der die Reformierungstemperatur ähnlich der Betriebstemperatur der Brennstoffzelle ist. Dadurch, dass der Umsetzungsgrad des Reformats meist nicht bei 100% liegt passiert ein Teil des Brennstoffes den Reformer ohne in Wasserstoff und Kohlendioxid (CO₂) umgewandelt zu werden. Dies liegt zum einen daran, dass bei niedrigen Temperaturen, von beispielsweise unter 250 °C, bei der Methanoldampfreformation mit Platin oder kupferbasierten Katalysatoren z.B. CuZnOAl₂O₃ eine fast vollständige Umsatzrate mit einer wirtschaftlichen Menge an Reformerkatalysator nicht möglich ist. Zudem können bei der Reformierung mit niedrigen Umsatzraten Zwischenprodukte gebildet werden, die aus dem Reformerraum austreten. Bei der Reformierung von Alkohol sind diese Zwischenprodukte beispielsweise Aldehyde. Bei der Dampfreformierung von Methanol entsteht bspw. Formaldehyd. Der nicht reformierte Brennstoff bzw. die Zwischenprodukte können von der Brennstoffzelle nicht genutzt werden. Auch wenn das Anodenfluid im Kreislauf gefahren wird geht ein Großteil durch das Abgas welches über die Kohlendioxidabscheidung abgetrennt wird verloren. Somit wird der nicht umgesetzte Brennstoff am Anodenausgang nicht wieder dem Reformer zugeführt. Daher ist dieser Teil des Brennstoffes, der nicht im Reformer umgewandelt wurde, für die Stromgewinnung verloren. Dieser Verlust vermindert den Wirkungsgrad des Energiewandlers bestehend aus einem Reformer und einer Brennstoffzelle. Zudem kann der nicht in Wasserstoff umgesetzte Brennstoff der Brennstoffzelle erheblich Schaden zufügen. Beispielsweise bildet insbesondere bei Temperaturen über 180 °C Methanol in Verbindung mit Phosphorsäure Trimethylphosphat, was bei einer phosphorsauren Hochtemperatur Polymer-Elektrolyt-Membran (PEM) einen Verlust von Phosphorsäure des Elektrolyten bewirkt, da Phosphorsäure in Form des gasförmigen Tri-Methyl-Esters abreagiert und aus der Brennstoffzelle abgeführt wird.

Bei aus dem Stand der Technik bekannten Brennstoffzellensystemen mit einer Reformerbetriebstemperatur von 150 °C bis 700 °C und mehr wird die vom Reformer für die Reformation benötigte Wärme in der Regel mit Hilfe eines zusätzlichen Brenners bereitgestellt. Somit wird zum Beheizen des Reformers zusätzlicher Brennstoff benötigt. Dieser Teil des Brennstoffs steht nicht für die Gewinnung von elektrischer Energie zur Verfügung. In der Regel erfolgt die Beheizung eines derartigen Reformers derart, dass der Anode der Brennstoffzelle mehr Reformat (Wasserstoff) zur Verfügung gestellt wird, als diese tatsächlich umsetzt. Der nicht verbrauchte Teil wird nachdem er den Anodenraum der Brennstoffzelle verlassen hat dem Brenner, beispielsweise einem katalytischen Brenner, zugeführt. Auf diese Weise gehen etwa 20% bis 35% des Brennstoffs für die Gewinnung von elektrischer Energie verloren.

Aufgabe der vorliegenden Erfindung ist es daher ein Brennstoffzellensystem bereitzustellen, dessen Funktion gegenüber dem Stand der Technik insbesondere im Hinblick auf den Wirkungsgrad verbessert ist.

Diese Aufgabe wird mit einer Vorrichtung gemäß Anspruch 1 und einem Verfahren gemäß Anspruch 13 gelöst. Vorteilhafte Ausgestaltungen sind in den Unteransprüchen angegeben.

Die vorliegende Erfindung betrifft ein Brennstoffzellensystem zur internen thermisch gekoppelten Reformierung mit Reformataufbereitung. Dieses umfasst einen Brennstoffzellenstapel mit einem Anodeneinlass, einem Anodenauslass, einem Kathodeneinlass und einem Kathodenauslass. Weiterhin ist eine mit dem Brennstoffzellestapel thermisch gekoppelte Reformereinrichtung zur Dampfreformation zum Bereitstellen eines Reformats vorgesehen, die dem Anodeneinlass vorgeschaltet ist, wobei das Reformat reformiertem Brennstoff umfasst. Zwischen der Reformereinrichtung und dem Anodeneinlass ist eine Aufbereitungseinrichtung zum Reformieren und/oder Entfernen von nicht reformiertem Brennstoff und/oder schädlichen Stoffen aus dem Reformat angeordnet, um ein Anodenfluid bereitzustellen.

Vorzugsweise liegt die Temperatur bei der thermisch gekoppelten Dampfreformierung im Bereich des Temperaturniveaus der Brennstoffzelle.

Insbesondere ist vorgesehen, dass bei der thermischen Kopplung die thermische Energie von der Brennstoffzelle auf die Reformereinrichtung mittels Wärmeleitung d.h. über einen Feststoff bzw. - körper erfolgt.

Ferner kann auch eine Wärmeübertragung mittels eines extra dafür vorgesehenen Mediums (nicht mittels des Brenngases), welches in flüssiger oder gasförmiger Form vorliegt, realisiert werden. Dies wird beispielsweise mittels eines Mediums in einem Wärmerohr folgenderweise gelöst werden. Die Wärmeübertragung innerhalb eines Wärmerohrs findet über Verdampfung, Konvektion und Kondensation statt. Innerhalb des Betriebstemperaturfensters der in dem Wärmerohr enthaltenen Flüssigkeit können sehr hohe Wärmeströme realisiert werden. Die Energieübertragung vom Stack auf den Reformer kann dadurch bereits mit einem minimalen Temperaturunterschied zwischen Brennstoffzelle und Reformer von beispielsweise 1 - 10 °C realisiert werden, auch wenn der Stack und der Reformer räumlich getrennt sind. Es kann aber auch eine Flüssigkeit in einem Flüssigkeitskreislauf verwendet werden. Dabei nimmt die Flüssigkeit im Flüssigkeitskreislauf die im Stack entstehende Abwärme entsprechend ihrer Wärmekapazität über geeigneter Wärmeübertragerstrukturen auf und gibt die Wärmeenergie wieder über geeignete Wärmeübertragerstrukturen an den Reformer ab. Der Wärmeübertrag findet dabei ebenfalls über Konvektion statt.

Das Reformat kann vorzugsweise aus einem Methanol-/Wasserdampf-Gemisch erzeugt werden.

Vorzugsweise ist der Brennstoffzellenstapel als Hochtemperatur-Polymerelektrolyt-Membran (HT-PEM) Brennstoffzelle ausgebildet. Diese ist aufgrund ihrer höheren Betriebstemperatur unempfindlicher gegen Katalysatorvergiftungen durch Kohlenmonoxid. Die Betriebstemperaturen einer derartigen Brennstoffzelle liegen im Bereich zwischen 140 °C bis 230 °C bzw. zwischen 160 °C und 210 °C und insbesondere zwischen 150 °C und 200 °C. Erfindungsgemäß kann der Brennstoffzellenstapel auch als (PAFC) ausgebildet sein. Die Brennstoffzelle kann eine Protonenaustauschmembranbrennstoffzelle oder eine Phosphorsäurebrennstoffzelle sein.

Die Reformereinrichtung ist derart ausgebildet, das aus einem der Reformereinrichtung zugeführten Medienstrom, der Kohlenwasserstoffe enthält, ein Reformat bzw. reformierter Brennstoff erzeugbar ist. Die Reformereinrichtung ist zur Dampfreformierung ausgebildet.

Die Reformereinrichtung kann zur Umsetzung eines von einer Befeuchtungseinheit bereitgestellten Medienstroms in ein Reformat ausgebildet sein. Der von der Befeuchtungseinheit zugeführte Medienstrom ist ein mit Brennstoff, vorzugsweise Methanol, angereichertes Trägergas, z.B. CO₂, wobei der Brennstoff und das Wasser in der Reformereinrichtung zu Wasserstoff und Kohlendioxid umgesetzt werden.

Die Reformereinrichtung kann auch zur Umsetzung eines von einer Verdampfereinrichtung bereitgestellten Medienstroms in ein Reformat ausgebildet sein. Der von der Verdampfereinrichtung zugeführte Medienstrom umfasst z.B. Methanoldampf und Wasserdampf, die in der Reformereinrichtung zu Wasserstoff und Kohlendioxid umgesetzt werden.

Das Reformat kann Wasserstoff, Kohlendioxid und nicht bzw. nur teilreformierten Brennstoffdampf, wie z. B. Methanoldampf und nicht umgesetzten Wasserdampf umfassen. Zudem kann das Reformat auch noch das Trägergas, wie z.B. Kohlendioxid, umfassen.

Der Anteil an Wasserdampf resultiert aus dem im Medienstrom eingestellten Wasserdampf-Kohlenstoffverhältnis. Das Wasserdampf-Kohlenstoffverhältnis beträgt bei der Dampfreformation in etwa zumindest 1 bis 2 zu 1 und insbesondere zumindest 1,2 bis 1,5 zu 1.

Eine derartige Dampfreformation ist endotherm und erfordert daher eine Wärmezufuhr. Die hierfür erforderlich Wärme muss nicht separat zugeführt werden sondern erfolgt durch eine thermische Kopplung mit dem Brennstoffzellenstapel. Dies erhöht die Effizienz des Brennstoffzellesystems, da keine externe Wärme zum Betrieb der Reformereinrichtung zugeführt werden muss.

Die Reformereinrichtung kann einen kupferbasierten Katalysator verwenden und kann mit Betriebstemperaturen von zumindest 150 °C und vorzugsweise von zumindest 180 °C bis 230 °C bzw. 280°C betrieben werden. Eine HT-PEM Brennstoffzelle mit einer Betriebstemperatur von zumindest in etwa 140 °C bis 230 °C oder auch eine andere Brennstoffzelle mit ähnlichen oder sogar noch höheren Betriebstemperaturen kann als Wärmequelle für die Reformereinrichtung verwendet werden.

Mit der Aufbereitungseinrichtung wird der in der thermisch gekoppelten Reformereinrichtung nicht reformierte Brennstoff entfernt oder reformiert. Im Falle der Reformierung kann der Brennstoff dann von der Brennstoffzelle genutzt werden. Daher steht dieser Teil des Brennstoffes, der nicht in der thermisch gekoppelten Reformereinrichtung umgewandelt wurde, für die Stromgewinnung zur Verfügung. Dies erhöht den Wirkungsgrad. Durch das Entfernen wird verhindert, dass der nicht in Wasserstoff umgesetzte Brennstoff der Brennstoffzelle Schaden zufügt. Der Brennstoff kann wiederum einen Tank oder direkt dem Verdampfer wieder zugeführt werden. Damit steht dieser Teil des Brennstoffes auch der Brennstoffzelle zur Verfügung.

Die erfindungsgemäße Vorrichtung ermöglicht somit durch die thermisch gekoppelte Reformierung zur Dampfreformation mit Aufbereitungseinrichtung eine effiziente Umsetzung des Brennstoffes und verhindert eine Beschädigung der Brennstoffzelle im Gegensatz zu der aus dem Stand der Technik bekannten internen Reformierung, wie z.B. der DE 199 45 667 oder der DE 29 27 665, bei denen auf Grund der Betriebstemperatur der Brennstoff nicht vollständig umgesetzt wird, was zur Beschädigung der Brennstoffzelle führt und/oder keine effizienter Betrieb möglich ist.

Nur mit der erfindungsgemäßen thermisch gekoppelten Reformierung in Verbindung mit der Aufbereitungseinrichtung kann die thermisch gekoppelte Reformierung, die auch eine interne Reformierung sein kann, überhaupt für einen dauerhaften Betrieb eines Brennstoffzellensystems nutzbar gemacht werden.

Die Abwärme des Brennstoffzellenstapels zu nutzen ist vorteilhaft, da die Abwärme des Brennstoffzellenstapels um ein Vielfaches höher ist als die für die Reformation benötigte Wärmemenge. Durch die Nutzung der Abwärme wird kein zusätzlicher Brennstoff zum Beheizen der internen Reformereinrichtung benötigt. Zudem muss der Brennstoffzellenstapel weniger gekühlt werden und es herrscht eine bessere Temperaturverteilung innerhalb des Brennstoffzellenstapels.

Es muss daher weniger zusätzliche Energie für eine Kühleinrichtung aufgewendet werden, da in etwa zumindest 10 % bis 30 % der Abwärme des Brennstoffzellenstapels verwendet wird, um die Reformereinrichtung zu betreiben.

Die Nutzung zumindest eines Teils der Abwärme von z.B. 25 % erhöht, im Gegensatz zu anderen bekannten Brennstoffzellensystemen, bei denen die gesamte Abwärme mittels eines Kühlsystems abgeführt werden muss, den Wirkungsgrad des Energiesystems und vermindert die Kosten des Systems. In diesem Falle kann durch eine interne Reformierung eine externe Kühlung an zumindest einer Außenfläche bzw. den Aussenflächen des Brennstozellenstapels angewendet werden und auf einen internen Kühlkreislauf innerhalb der Brennstoffzelle verzichtet werden. Dadurch ist das System kostengünstiger und einfacher im Aufbau.

Vorzugsweise kann der Reformerkatalysator flächig zwischen den Einzelzellen des Stacks angeordnet sein. Dadurch wird die Temperaturungleichverteilung über die aktive Elektrodenfläche verringert. Die Temperaturgleichverteilung wird auch durch den Umstand begünstigt, dass die Reformerumsätze und damit dessen Energiebedarf höher ist, wenn sein Temperaturniveau höher ist. Damit ist die Wärmeaufnahme und somit die Kühlwirkung des Reformers an jenen Stellen wo es besonders heiß ist - im Falle einer Kühlung von Außen in der Mitte des Flowfields - höher und trägt dadurch zu einer Temperaturgleichverteilung bei. Außerdem findet eine Wärmeleitung innerhalb des Reformerraumes bzw. des Reformerkatalysators statt, was die Temperaturgleichverteilung zusätzlich begünstigt. Eine bessere Temperaturgleichverteilung erhöht die Lebensdauer der Brennstoffzelle. Mittels einer gleichmäßigeren Temperaturverteilung können höhere mittlere Temperaturen erreicht werden was die Leistung der Brennstoffzelle erhöht.

Durch die im erfindungsgemäßen Brennstoffzellensystem vorgesehene thermische Kopplung des Brennstoffzellenstapels mit der Reformereinrichtung kann die Reformereinrichtung mit der Abwärme des Brennstoffzellenstapels beheizt werden. Auf diese Weise ist eine effizientere Nutzung des Brennstoffs möglich. Neben der Erhöhung des Wirkungsgrads durch Beheizung der Reformereinrichtung mit der Abwärme der Brennstoffzelle bietet die thermische Kopplung der Reformereinrichtung und des Brennstoffzellenstapels außerdem den Vorteil, dass weniger Abwärme von der Brennstoffzelle beispielsweise mittels eines Lüfters oder einer Kühleinrichtung bzw. eines Wärmetauschers abgeführt werden muss. Eine Abführung der Wärmeenergie ist in der Regel technisch relativ aufwendig, weil insbesondere bei Systemen mit einer höheren Leistung größer 250 Watt üblicherweise ein extra Kühlkreislauf in den Brennstoffzellenstapel integriert werden muss. Somit bietet das erfindungsgemäße Brennstoffzellensystem zum einen bauliche Vorteile, was die Konstruktion des Systems vereinfacht, was zudem auch eine erhebliche Kostenersparnis im Brennstoffzellensystem mit sich bringt.

Die thermische Kopplung sollte möglichst direkt erfolgen, um die Betriebstemperaturen der Reformereinrichtung möglichst nahe an die Betriebstemperaturen des Brennstoffzellenstapels anzugleichen, da für einen hohen Umsetzungsgrad in der Reformereinrichtung eine möglichst hohe Temperatur vorteilhaft ist und die Betriebstemperatur der derzeit am Markt verfügbaren HT-PEM-Brennstoffzellen für eine Dampfreformierung noch relativ niedrig sind. Daher erfolgt beim erfindungsgemäßen Brennstoffzellensystem eine thermische Kopplung der Reformereinrichtung mit den Elektrodenräumen der Brennstoffzelle. Die Reformereinrichtung kann somit integraler Bestandteil des Brennstoffzellenstapels sein.

Gegebenenfalls kann der Brennstoffzellenstapel eine externe Kühleinrichtung, die bspw. einen Kühlkreislauf umfasst, aufweisen, um überschüssige Wärmeenergie abzuführen.

Gemäß dem erfindungsgemäßen Brennstoffzellensystems ist es insbesondere vorteilhaft, dass der Wirkungsgrad des Brennstoffzellensystems dadurch erhöht wird, dass das im Reformat enthaltene Methanol durch die Aufbereitungseinrichtung nicht verloren geht sondern dem System erhalten bleibt und somit wieder für die Gewinnung elektrischer Energie zur Verfügung steht.

Die Aufbereitungseinrichtung kann eine externe Reformereinrichtung bzw. eine Nachreformiereinrichtung sein, die ähnlich der internen, vorstehend beschriebenen, Reformereinrichtung arbeitet. Die Nachreformiereinrichtung kann z.B. mit einem katalytischen Brenner beheizt werden.

Die Aufbereitungseinrichtung kann wie nachfolgend beschrieben als Reformataufbereitungseinrichtung ausgebildet sein.

Die Reformataufbereitungseinrichtung kann eine Kondensationseinrichtung, wie z.B. einen Wärmetauscher, aufweisen, um nicht reformierten Brennstoff mittels Kondensation aus dem Anodenfluid zu entfernen. Die Kondensationseinrichtung ist derart ausgebildet, dass nicht umgesetzter bzw. reformierter Brennstoffdampf und Wasserdampf die Kondensationseinrichtung kontaktieren und dadurch kondensieren.

Zusätzlich kann die Reformataufbereitungseinrichtung eine Wascheinrichtung aufweisen. In der Wascheinrichtung wird mittels Wasser weiterer Brennstoff zur Kondensation gebracht. Dieses Wasser kann z.B. über das Produktwasser der Brennstoffzelle aus dem Kathodenfluid mittels eines Wärmetauscher durch Kondensation gewonnen werden. Dieses Wasser wird im Folgenden als Waschwasser bezeichnet, und kann Brennstoff aufnehmen und wird dadurch zu einer Wasch- bzw. Brennstofflösung.

In der Reformataufbereitungseinrichtung kontaktiert das gasförmige Reformat mit Wasser oder einer Brennstoff- bzw. Methanollösung derart, dass Brennstoff aus der Gasphase im Wasser gelöst wird. Es erfolgt somit eine Phasentrennung in der Wascheinrichtung. Das verwendete Wasser bzw. Waschwasser kann z.B. aus dem Kathoden- oder Anodenkondensat der Brennstoffzelle bereitgestellt werden.

Die Wascheinrichtung kann als ein Körper, z.B. ein mit Waschwasser bzw. -lösung getränkter Docht, eine Gewebe z.B. Glasfasergewebe, ein hydrophiler Füllkörper, ein poröser rohrförmiger Körper oder ein hydrophiler rohrförmiger Körper ausgebildet sein, wobei das gasförmige Reformat an der Oberfläche des Körpers Wascheinrichtung entlang strömt.

Diese sogenannte Waschung oder Auswaschung kann auch mittels eines gekühlten Glockenbodens bzw. eine Glockenbodenkolonne als Einrichtung verwendet werden, um einen Kontakt zwischen Gasphase und Waschwasser herzustellen. Dabei perlt das Gas durch das Waschwasser im Gegenstrom. Eine Kühlung der Kolonne ist z.B. über metallische Waschwasserwannen bzw. Gehäuse möglich.

Bei diesen Kondensationsverfahren wird vorteilhafterweise gekühlt, da die Kondensationswärme die Waschlösung aufheizt und dadurch die Partialdampfdrücke von Brennstoff (Methanol) und Wasser erhöht werden. Diese Einrichtung weist daher z.B. gekühlte Kanäle oder Behälter auf welche über einen Lüfter gekühlt werden können.

Um den Bauraum der Reformataufbereitungseinrichtung möglichst gering zu halten, sollte der Diffusionsweg in der Gasphase möglichst gering sein. Da die Effizienz der Waschung auch temperaturabhängig ist, wird das Reformat vorteilhafterweise gekühlt, um die Kondensationsenergie abzuführen.

Die Reformataufbereitungseinrichtung kann somit derart ausgebildet sein, dass eine Kondensationseinrichtung bzw. ein Wärmetauscher und eine Wascheinrichtung zusammen in einem einzigen Bauteil integriert sind.

Um den Wirkungsgrad der Auswaschung in der Reformataufbereitungseinrichtung zu erhöhen, sollte die Verweilzeit der Gasphase an der Wasseroberfläche möglichst lange sein und die Brennstoffkonzentration der Waschlösung möglichst gering sein. Zudem sollte eine große Wasseroberfläche bereitgestellt werden, so dass eine große Austauschfläche zwischen dem gasförmigen und dem flüssigen Medium vorhanden ist. Insbesondere ist vorteilhaft, wenn die beiden Medien im Gegenstrom geführt werden, so dass eine gerichtete Strömung vorhanden ist und die Reinigungswirkung optimal ist. Die Waschung nutzt dabei die Dampfdruckerniedrigung von Methanol durch Erniedrigung der Methanolkonzentration in der Waschlösung wobei eine Erwärmung des Fluides aufgrund der freiwerdenden Kondensationswärme mittels Kühlung verhindert wird. Die Waschlösung kann maximal so viel Methanol bzw. solange Methanol aus der Gasphase aufnehmen bis der Methanoldampfdruck der Lösung dem Methanolpartialdruck des zu reinigenden Reformats entspricht. Daher ist es für die Aufnahmeleistung entscheidend, die Waschlösung bei möglichst niedrigen Temperaturen zu halten (Verringerung der Temperatur bedeutet Verringerung des Dampfdrucks der Lösung). Dies kann mittels Lüfter geschehen und oder mittels eines Wärmetauschers der über eine Verdunstungskühlung einer Flüssigkeit arbeitet. Diese Flüssigkeit kann beispielsweise Kathodenkondensat sein, das auf eine das Anodenfluid kontaktierenden Wärmeaustauschfläche aufgebracht wird, die diese benetzt und mittels eines Gasstromes z.B. Umgebungsluft verdampft wird. Um eine gute Waschung von z.B. zumindest 75 % bzw. 80% bzw. 90% der maximalen Methanolaufnahme, bei niedrigem Bauraum zu erreichen wird das Anodenfluid im Gegenstrom über die Waschlösung geströmt.

Gemäß dem erfindungsgemäßen Brennstoffzellensystems ist es somit vorteilhaft, dass das Reformat nicht direkt dem Anodenraum der Brennstoffzelle zugeführt wird, sondern, dass das Reformat in einer Reformataufbereitungseinrichtung von nicht reformierten Brennstoff und/oder schädlichen Stoffen befreit bzw. gereinigt wird.

Die Aufbereitungseinrichtung ist derart ausgebildet, dass das Reformat von für die Brennstoffzelle schädlichen Stoffen gereinigt wird. Schädliche Stoffe sind beispielsweise im Reformer nicht umgesetzter Brennstoff, wobei es sich hierbei in der Regel um einfache Kohlenwasserstoffe wie beispielsweise Methanol handelt. Schädliche Stoffe sind auch Zwischenprodukte, die bei der Reformation auftreten, wie beispielsweise Aldehyde, Partikel die aufgrund eines Abriebes des Reformerkatalysators anfallen und auch Partikel oder Verunreinigungen die im Brennstoff enthalten waren. Insbesondere verlängert sich die Lebensdauer des Brennstoffzellensystems dadurch, dass keine schädlichen Stoffe in den Brennstoffzellenstapel gelangen und dort den Elektrolyten bzw. die Membran beschädigen und/oder die Reaktionen negativ beeinflussen.

Nicht oder nicht vollständig reformierte Stoffe sind Stoffe die noch nicht vollständig oxidiert sind bzw. noch Wasserstoff enthalten und in der Brennstoffzelle nicht verstromt werden können. Bei der Methanoldampfreformation ist Methanol eine nicht reformierte Substanz und beispielsweise Formaldehyd ein Teilreformierte Substanz.

Auf diese Weise werden die Nachteile insbesondere deren Effizienz der Reformierung bei niedrigem Temperaturniveau ausgeglichen und sogar erhebliche Vorteile im Hinblick auf den Wirkungsgrad erzielt.

Insbesondere kann durch das Vorsehen einer Reformataufbereitungseinrichtung eine noch höhere Brennstoff bzw. Methanolnutzung erfolgen. Dies kann durch eine Abtrennung des Methanols aus der Gasphase (mittels Kondensation) erfolgen welches dann einer Verdampfereinrichtung oder einer Befeuchtungseinheit und somit der internen Reformierung in der Reformereinrichtung wieder zugeführt werden kann.

Weiterhin kann der Reformataufbereitungseinrichtung, auch eine Vorkondensationseinrichtung vorgeschaltet sein in der mittels eines Wärmtauschers Methanol aus dem Reformat durch Luftkühlung auskondensiert wird.

Zur Vorkondensation ist der Reformataufbereitungseinrichtung ein Wärmetauscher vorgeschaltet, mittels dem das aus dem Reformerraum der Reformereinrichtung oder der Nachreformiereinrichtung ausströmende Reformat gekühlt wird. Hierbei kondensiert ein Teil des nicht umgesetzten Brennstoffes und im Falle einer Wasserdampfreformation ein Teil des nicht umgesetzten Wasserdampfes aus. Durch eine Phasentrennung wird das Kondensat von der Gasphase abgetrennt. Dieses Kondensat kann einer Verdampfereinrichtung oder einer Befeuchtungseinheit, einem Brennstoffreservoir oder einer Brennstofflösung zugeführt werden.

Als Aufbereitungseinrichtung kann auch eine Vorkondensationseinrichtung alleine vorgesehen sein. Dies ist der Fall wenn der Reformierungsgrad hoch ist, das bedeutet wenn wenig Methanol im Reformat vorhanden ist und/oder wenn noch ein hoher Wasserdampfdruck im Reformat vorherrscht. D.h. die gesamte Aufbereitungseinrichtung kann auch nur aus einer Vorkondensationseinrichtung bestehen.

Besonders vorteilhaft ist es eine Vorkondensation in der Vorkondensationseinrichtung (erste Stufe), und dann eine Waschung mit gleichzeitiger Kühlung in der Reformataufbereitungseinrichtung (zweite Stufe) vorzusehen.

Die beiden Möglichkeiten zur Abtrennung (Reformataufbereitungseinrichtung) bzw. Umwandlung von Brennstoff (Nachreformiereinrichtung) können auch kombiniert werden. D.h. es erfolgt zunächst eine Methanolkondensation über die Reformataufbereitungseinrichtung gekoppelt mit einer Phasentrennung und der Entnahme des Kondensates und dann eine weitere Reformierung über die externe Nachreformiereinrichtung oder umgekehrt. Somit ist auch eine Kombination von Reformataufbereitungseinrichtung und Nachreformiereinrichtung möglich.

Gemäß der vorliegenden Erfindung kann somit zur Entfernung von nicht umgesetzten Kohlenwasserstoff aus der Reformereinrichtung oder aus einer Reinigungsvorstufe - wie der Methanolwäsche - ein weiterer extern positionierter Reformierungskatalysators bzw. eine Nachreformiereinrichtung vorgesehen sein.

Die Nachreformiereinrichtung kann z.B. einen Kupfer oder Edelmetallbasierten Katalysator aufweisen, der vorzugsweise zur Katalyse einer Dampfreformation ausgebildet ist.

Die Nachreformiereinrichtung kann über einen katalytischen Brenner erhitzt werden der mit Anodenabgas welches noch Restwasserstoff enthält beheizt werden kann. Da der Wasserstoff in der HT-PEM Brennstoffzelle in der Regel nicht vollständig umgesetzt wird, ist das Anodenabgas mit dem restlichen Wasserstoff für den Betrieb dieses katalytischen Brenners nutzbar. Jedoch ist der Wasserstoffbedarf für den katalytischen Brenner dabei deutlich niedriger als bei Brennstoffzellensystemen ohne thermisch gekoppelt Reformer. Daher ist der Wirkungsgrad auch bei dieser Anordnung höher als bei gewöhnlichen Brennstoffzellensystemen mit Reformer. Dies bedingt sich auch vorteilhafter Weise dadurch, dass bei dieser Anordnung auch, das Reformat aus dem internen Reformer schon vorgeheizt in den externen Reformer strömt und dadurch nicht mehr so stark erhitzt werden muss.

Die Nachreformiereinrichtung ist hinsichtlich ihres Reformierungskatalysators sowie der Einstellung der Betriebstemperatur derart ausgebildet, dass eine möglichst hohe Umsatzrate des Methanols erzielt wird, d.h. dass der Umsatz möglichst vollständig ist. Der Reformierungsprozess der Nachreformiereinrichtung kann auf einer Wasserdampfreformation oder auf einer partiellen Oxidation basieren (hier bei Verwendung von selektiven Katalysatoren). Es kann also zusätzlich Wasser oder Luftsauerstoff eingebracht werden.

Wenn die externe Nachreformiereinrichtung nicht auf hohe Umsatzraten ausgebildet ist, kann dessen Reformat wiederum mit einer Reformataufbereitungseinrichtung zur Abreicherung von Brennstoff mittels Kondensation kombiniert werden. Dies hat auch den Vorteil, dass das Anodenfluid vor Eintritt in die Brennstoffzelle abgekühlt wird und der Brennstoffzelle dann im Anodenraum Wärme entzieht.

Die Nachreformiereinrichtung kann in Abhängigkeit von dem Umsetzungsgrad, beispielsweise über dessen Betriebstemperatur betrieben werden. Daher könnte beispielsweise im Falle dass der interne Reformer degradiert ist oder dass einer höheren Brennstoffzellenleistung erforderlich ist, und mehr Wasserstoff produziert werden muss, zusätzlich Methanol über den externen Reformer umgesetzt werden. Auf diese Weise können die Reformereinrichtung und die Nachreformiereinrichtung den Wasserstoffbedarf der Brennstoffzelle gemeinsam decken. Bzw. lässt sich über eine entsprechende Anpassung der Betriebszustände auf Anforderungen, wie z.B. Degradation oder erhöhten Brennstoffbedarf reagieren. Somit ist es möglichüber das Verhältnis der beiden zueinander, d. h. über den Parameter Betriebstemperatur, die Reformierungsleistung der Reformereinrichtung und/oder der Nachreformiereinrichtung zu steigern oder zu verringern.

Die Reformereinrichtung kann zwischen den einzelnen Zellen eines Brennstoffzellenstapels in einer zweigeteilten Separatorplatte angeordnet sein.

Eine bevorzugte Einbringung der Reformereinrichtung in den Brennstoffzellenstapel erfolgt derart, dass jeweils nach zwei Einzelzellen ein Reformerraum vorgesehen ist. Durch diesen Aufbau können Bipolar- bzw. Versorgungsplatten eingespart werden. Ein gleichmäßiges Kühlen der Zellen bleibt weiterhin bestehen, da jede Einzelzelle mit einer Seite (Elektrode) an einen Reformerraum anschließt.

Die Fluidführung des Reformatstroms ist derart ausgebildet, dass es einen Zuführeinlass zum Zuführen der Edukte in den Reformer und einen separaten Auslass zum Abführen des Reformats gibt. Insbesondere wird hierbei zunächst der Reformerraum der Reformereinrichtung durchströmt, anschließend die Aufbereitungseinrichtung und nach der Aufbereitung der Anodenraum der Brennstoffzelle.

Weiterhin kann eine Befeuchtungseinheit zum Bereitstellen eines Brennstoff- und Wasserdampf enthaltenden Trägergases zur Versorgung der Brennstoffzelle vorgesehen sein. Die Befeuchtungseinheit umfasst einen Befeuchtungsraum, der zum Aufnehmen einer brennstoffenthaltenden Flüssigkeit ausgebildet ist, einen in den Befeuchtungsraum mündenden Einlass zum Zuführen einer Brennstoff enthaltenden Flüssigkeit, einen weiteren in den Befeuchtungsraum mündenden Einlass zum Zuführen eines Trägergases, derart, dass das Trägergas im Befeuchtungsraum mit der Flüssigkeit in Kontakt steht. Weiterhin ist ein Auslass zum Ausgeben des gasförmigen Brennstoffes enthaltenden Trägergases vorgesehen.

An Stelle der Befeuchtungseinheit kann auch eine Verdampfereinrichtung vorgesehen sein, die zum Bereitstellen von Wasser- und Brennstoffdampf aus einer Brennstofflösung z.B. Methanollösung ausgebildet ist, wie sie auch in der Beschreibungseinleitung, z.B. in der WO 97/50140, beschrieben ist.

Gemäß dem erfindungsgemäßen Brennstoffzellensystem ist die Reformereinrichtung bzw. der Reformerraum thermisch mit dem Brennstoffzellenstapel verbunden. Im Gegensatz zur thermisch gekoppelten oder der internen Reformierung ist bei der vorliegenden Erfindung ein Auslass aus dem Reformerraum vorhanden, der das Reformat zur Aufbereitungseinrichtung transportiert. Danach strömt das wasserstoffreiche Reformat in den Anodeneinlass und so in den Anodenraum des Brennstoffzellenstapels. Daher wird das erfindungsgemäße Brennstoffzellensystem als Brennstoffzellensystem mit thermisch gekoppelter Reformierung und mit Reformataufbereitung (Reformataufbereitungseinrichtung) oder Nachreformierung (Nachreformiereinrichtung) bezeichnet. Hierdurch werden die folgenden Vorteile erzielt:
- Höherer Wirkungsrad, da die Reformereinrichtung mit der Abwärme des Brennstoffzellenstapels beheizbar ist anstatt mit Brennstoff oder Restwasserstoff aus dem Anodenausgang (effizientere Nutzung des Brennstoffs)
- Aufgrund der endothermen Reformierung in der Brennstoffzelle sowie der Beheizung von Gasen (Refomeredukte, gekühltes Reformat nach einer Kondensationseinrichtung) muss weniger Abwärme von der Brennstoffzelle mittels einer Kühleinrichtung abgeführt werden,
- Einfacher Aufbau des Systems, da keine oder nur eine vereinfachte separate bzw. externe Reformereinrichtung notwendig ist,
- Kostenersparnis,
- Zwischenprodukte der Reformation werden entfernt und nicht dem Anodenraum zugeführt,
- Verlängerung der Lebensdauer des Brennstoffzellensystems dadurch, dass keinen schädlichen Stoffe in den Brennstoffzellenstapel (Anodenraum) gelangen, und
- das im Reformat enthaltene also nicht umgesetzte Methanol gelangt nicht in das Abgas sondern ist durch die Aufbereitungseinrichtung dem System wieder zuführbar und steht somit für die Gewinnung elektrischer Energie zur Verfügung.
- Durch Kondensation von Brennstoff aber auch bei der externen Reformierung wird aus dem Reformat meistens auch Wasserdampf entnommen. Dadurch enthält das Anodengas weniger Wasserdampf was vorteilhaft bei niedrigen Temperaturen, z.B. beim Systemstart ist, da ein Auskondensieren von Wasser in der Zelle vermieden wird. Kondensiertes Wasser oder Brennstoff schadet dem Elektrolyten da durch dessen flüssige Phase z.B. Phosphorsäure ausgetragen wird. Die Kondensation von Wasser ist insbesondere problematisch da die Gasphase durch den Wasserstoffverbrauch über die Anode abnimmt und dadurch der Wasserdampfpartialdruck zunimmt.
- Über den Parameter Betriebstemperatur kann die Reformierungsleistung der Reformereinrichtung und/oder der Nachreformiereinrichtung gesteigert oder verringert werden.

Aus dem erfindungsgemäßen Aufbau des Brennstoffzellensystems zur internen thermisch gekoppelte Reformierung mit Reformataufbereitung (thermische Kopplung der Reformereinrichtung und des Brennstoffzellenstapels (Integration) sowie der zwischen der Reformereinrichtung und dem Anodenraum des Brennstoffzellestapels angeordneten Aufbereitungseinrichtung) ergibt sich der synergistische Effekt, dass eine direkte thermische Kopplung der Brennstoffzelle und der Reformereinrichtung möglich ist, wobei gleichzeitig der insbesondere bei höheren Temperaturen schädliche stoffliche Kontakt von Methanol und dem Elektrolyt wie Phosphorsäure vermieden wird und zudem das Reformat aufbereitet und/oder erneut reformiert werden kann. Das heißt, dass durch die Integration des Reformerkatalysators in (interne Reformierung) oder an die Brennstoffzelle, bei der der Reformerraum und der Anodenraum räumlich getrennt voneinander sind, ermöglicht wird, dass der Reformerkatalysator mit der Anode nicht in direktem Kontakt steht. Dadurch kann keine Phosphorsäure den Reformerkatalysator kontaktieren und somit schädigen bzw. einen Leistungsabfall verursachen.

Durch die oben genannten Vorteile des erfindungsgemäßen Brennstoffzellensystems erhöht sich der Gesamtwirkungsgrad des Systems erheblich.

Die Erfindung wird im Folgenden anhand der Zeichnungen näher erläutert. Diese zeigen in:
Fig. 1 eine schematische Darstellung eines erfindungsgemäßen Brennstoffzellensystems gemäß einem ersten Ausführungsbeispiel mit Reformataufbereitungseinrichtung,
Fig. 2 eine schematische Darstellung eines erfindungsgemäßen Brennstoffzellensystems gemäß einem zweiten Ausführungsbeispiel mit Nachreformiereinrichtung.
Fig. 3a eine schematische Darstellung, in einer seitlich geschnittenen Ansicht, einer Vorkondensationseinrichtung,
Fig. 3b eine schematische Darstellung, in einer seitlich geschnittenen Ansicht, einer Reformataufbereitungseinrichtung,
Fig. 4 eine perspektivische Ansicht eines Brennstoffzellenstapels mit einer Reformereinrichtung,
Fig. 5 eine schematische Darstellung einer weiteren Aufbereitungseinrichtung,
Fig. 6 eine Draufsicht auf eine Versorgungsplatte eines Brennstoffzellenstapels mit einer Reformereinrichtung,
Fig. 7 eine Draufsicht auf eine weitere Versorgungsplatte eines Brennstoffzellenstapels mit einer Reformereinrichtung,
Fig. 8 eine schematische Darstellung eines Brennstoffzellenstapels mit einer Reformereinrichtung,
Fig. 9 eine schematische Darstellung eines erfindungsgemäßen Brennstoffzellensystems gemäß einem dritten Ausführungsbeispiel,
Fig. 10 eine schematische Darstellung eines erfindungsgemäßen Brennstoffzellensystems gemäß einem vierten Ausführungsbeispiel,
Fig. 11 eine schematische Darstellung eines erfindungsgemäßen Brennstoffzellensystems gemäß einem fünften Ausführungsbeispiel,
Fig. 12 eine schematische Darstellung eines erfindungsgemäßen Brennstoffzellensystems gemäß einem sechsten Ausführungsbeispiel,
Fig. 13 eine schematische Darstellung eines erfindungsgemäßen Brennstoffzellensystems gemäß eines siebten Ausführungsbeispiel, und
Fig. 14 eine schematische Darstellung eines erfindungsgemäßen Brennstoffzellensystems gemäß einem achten Ausführungsbeispiel,

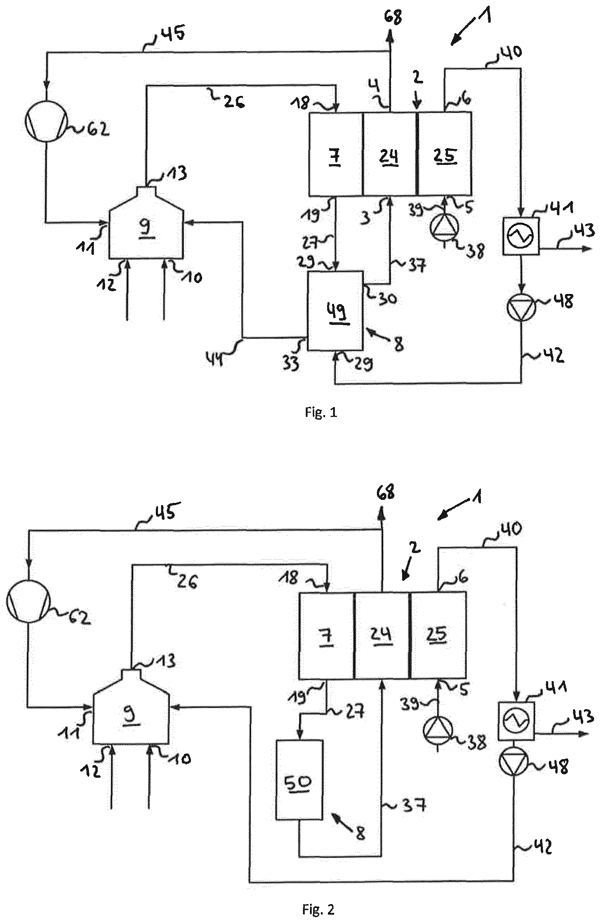

Ein Brennstoffzellensystem 1 umfasst gemäß einem ersten Ausführungsbeispiel eine Brennstoffzelle bzw. einen Brennstoffzellenstapel 2 mit einer Anode 24, mit einem Anodeneinlass 3 und einem Anodenauslass 4 und einer Kathode 25 mit einem Kathodeneinlass 5 und einem Kathodenauslass 6 (Fig. 1).

Weiterhin ist eine mit dem Brennstoffzellenstapel 2 thermisch gekoppelte Reformereinrichtung 7 zum Bereitstellen von Reformat bzw. von Anodenfluid vorgesehen, die dem Anodeneinlass 3 vorgeschaltet ist und ein zwischen der Reformereinrichtung 7 und dem Anodeneinlass 3 angeordnete Aufbereitungseinrichtung 8 zum Entfernen von nicht aufbereitetem Brennstoff und schädlichen Stoffen aus dem Reformat.

Zudem weist das Brennstoffzellensystem 1 eine Befeuchtungseinheit 9 auf. Die Befeuchtungseinheit 9 ist gemäß der in der WO 2010/066900 beschriebenen Befeuchtungseinheit aufgebaut und umfasst einen Befeuchtungsraum, der zum Aufnehmen einer Brennstoff enthaltenden Flüssigkeit ausgebildet ist, einen in den Befeuchtungsraum mündenden Einlass 10 zum Zuführen einer Brennstoff enthaltenden Flüssigkeit, einen weiteren in den Befeuchtungsraum mündenden Einlass zum Zuführen eines Trägergases 11 derart, dass das Trägergas im Befeuchtungsraum mit der Flüssigkeit in Kontakt steht und einen Einlass zum Zuführen von Wasser 12. Weiterhin ist ein Auslass 13 zum Ausgeben des gasförmigen Brennstoffs enthaltenden Trägergases vorgesehen.

In der Befeuchtungseinheit 9 wird die Flüssigkeit auf eine Temperatur unterhalb ihres Siedepunkts eingestellt. Hierdurch geht ein Teil der Flüssigkeit durch Verdunsten und nicht durch Verdampfen in die gasförmige Phase über und wird Bestandteil des Trägergases.

Unter Verdampfen wird eine Erwärmung einer Flüssigkeit über ihren Siedepunkt und ihr Übergang in die Gasphase, z.B. in einer Verdampfereinrichtung, verstanden. Als Verdunsten wird hier ein Prozess bezeichnet bei dem ein Trägergas (Kohlendioxid) Brennstoff- und Wasserdampf aus einer Brennstofflösung aufnimmt. Vorzugsweise bis zur vollständigen Sättigung des Trägergases. Der Grad der Dampfaufnahme hängt insbesondere vom Dampfdruck (Sättigungsgrad der jeweiligen Flüssigkeitskomponente) des Gases beim Eintritt in die Befeuchtungseinheit sowie von der Temperatur beim Austritt des Gases aus der Befeuchtungseinheit und seines Sättigungsgrades ab.

Der Auslass 13 zum Ausgeben des gasförmigen Brennstoffs enthaltenden Trägergases ist über einen Leitungsabschnitt 26 mit der internen thermisch gekoppelten Reformereinrichtung 7 verbunden.

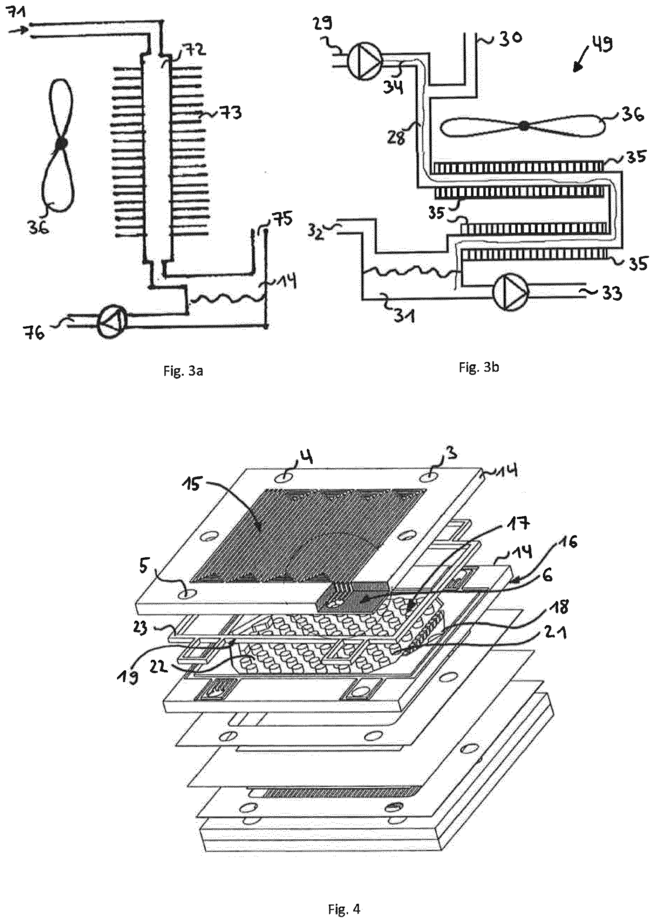

Die Reformereinrichtung 7 ist in Versorgungsplatten 14 eines Brennstoffzellenstapels 2 integriert (Fig. 4). Eine Seite einer Versorgungsplatte 14 ist mit einer meanderförmig verlaufenden Verteilerstruktur 15, 16, genannt Flowfield, für ein Anodenfluid bzw. entsprechend für ein Kathodenfluid versehen.

Auf der den Verteilerstrukturen 15, 16 gegenüberliegenden Seiten der Versorgungsplatte 14 ist ein Reformerraum 17 ausgebildet.

Der Reformerraum 17 weist einen Einlass 18 zum Zuführen des gasförmigen Brennstoffs enthaltenden Trägergases und einen Auslass 19 zum Abführen des aus dem gasförmigen Brennstoff gebildeten Reformats und des Trägergases auf. Im Reformerraum 17 ist ein Reformerkatalysator (nicht dargestellt) angeordnet, der gleichmäßig über den gesamten Reformerraum 17 verteilt ist. Zwischen dem Einlass 18 bzw. dem Auslass 19 und dem Reformerraum 17 ist eine Sperre 20, bspw. in Form von Kanälen oder Streben, zur Aufnahme eines Netzes, ausgebildet, die einen Austritt des Reformerkatalysators aus dem Reformerraum 17 in den Einlass 18 und den Auslass 19 verhindert, wenn das System bewegt wird. Weiterhin sind im Reformerraum 17 zylindrische Körper 21 angeordnet, um eine gleichmäßige Verteilung des Reformerkatalysators sicherzustellen. Diese dienen außerdem dazu eine elektrisch leitende Verbindung zwischen den Versorgungsplatten 14 auszubilden und um die mechanische Stabilität des Brennstoffzellenstapels 2 zu erhöhen.

Weiterhin ist der Reformerraum 17 von einer Nut 22 zur Aufnahme eines Dichtungselements 23 umgeben. Das Dichtungselement 23 umgibt zudem den Kathodeneinlass 5, den Kathodenauslass 6, den Anodeneinlass 3 und den Anodenauslass 4. Das Dichtungselement 23 ist vorzugsweise aus einem elastischen Kunststoff oder einer Dichtung auf Basis von Graphit ausgebildet.

Der Brennstoffzellenstapel 2 ist derart aufgebaut, dass auf eine Versorgungsplatte 14 mit einer Anode eine Versorgungsplatte 14 mit einer Kathode derart angeordnet wird, dass die beiden einen Reformerraum 17 ausbildenden Seiten der Versorgungsplatte einander zugewandt sind, wodurch der Reformerraum 17 ausgebildet wird. Auf diese Weise lässt sich ein Brennstoffzellenstapel 2 mit einer beliebigen Anzahl von Zellen, entsprechend der gewünschten Leistung, ausbilden. Dementsprechend ist immer eine Kathodenseite einer Anodenseite einer Versorgungsplatte 14 zugewandt, wobei zwischen den beiden Verteilerstrukturen 15, 16, Gasdiffusionsschichten und eine einen Katalysator bzw. Elektrolyten enthaltende Membran angeordnet ist (Fig. 4).

Eine bevorzugte Einbringung der Reformereinrichtung in den Brennstoffzellenstapel erfolgt derart, dass insbesondere nach zwei Zellen 15, 16, 15, 16, oder auch nach drei oder vier Zellen, jeweils ein Reformerraum 17 vorgesehen ist. Durch diesen Aufbau können den Reformerraum ausbildende Versorgungsplatten 14 eingespart werden. Eine gleichmäßige Kühlwirkung der Zellen wird weiterhin erzielt, da ausreichend Reformerräume zwischen den Zellen angeordnet sind.

Vorzugsweise ist der Brennstoffzellenstapel 2 als HT-PEM oder PAFC Brennstoffzelle ausgebildet. HT-PEM steht für Hochtemperatur- Polymerelektrolytmembran, PAFC für Phosphoric Acid Fuel Cell. Diese Elektrolyten arbeiten auf Basis von Phosphorsäure, die von einer basischen Polymerstruktur, wie z.B. Polybenzimidazol (PBI) oder TPS (HT-PEM), oder durch eine anorganische Trägerstruktur wie Siliciumkarbiden (z.B. SiC-H₃PO₄-PTFE BPO₄-H₃PO₄) in der Membran bzw. Elektrolytstruktur gehalten wird. Diese Brennstoffzellen werden in einem Temperaturbereich von 140 °C bis 250 °C und insbesondere von 160 °C bis 220 °C betrieben.

Bei Verwendung einer phosphorsauren HT-PEM werden, aufgrund der höheren Phosphorsäurebeständigkeit Versorgungsplatten, vorzugweise Mono- oder Bipolarplatten aus Graphit verwendet.

Für den Reformerraum 17 können auch metallische Platten verwendet werden, da in den Reformerraum keine Phosphorsäure eintritt. Wenn die Kühlleistung des Brennstoffzellenstapels 2 durch den Reformer 7 verstärkt werden soll, können die metallischen Platten entsprechend verlängert werden, sodass sie Laschen ausbilden, die seitlich aus dem Brennstoffzellenstapel hervorstehen. Die Platten können zur Kühlung von außen mit einem Lüfter angeströmt werden oder mit einer Kühleinrichtung kontaktieren.

Reformerräume 17, die von metallischen Platten begrenzt sind, eignen sich insbesondere, wenn der Reformerkatalysator auf einem metallischen Träger bzw. direkt auf die Platten des Reformerraums aufgebracht ist.

Der Auslass 19 der Reformereinrichtung 7 ist über einen weiteren Leitungsabschnitt 27 mit der Aufbereitungseinrichtung 8 verbunden.

Die Aufbereitungseinrichtung 8 ist gemäß dem ersten Ausführungsbeispiel als Reformataufbereitungseinrichtung 49 ausgebildet und weist eine Kondensations- und eine Wascheinrichtung auf.

Die Reformataufbereitungseinrichtung 49 umfasst einen meanderförmig verlaufenden, rohrförmigen Aufbereitungskanal 28, der sich in vertikaler Richtung von oben nach unten erstreckt (Fig. 3b). An seinem einen oberen Ende weist der Aufbereitungskanal 28 eine Zuleitung 29 zum Zuführen von Waschwasser, bspw. H₂O, und einen Auslass 30 zum Abführen von aufbereitetem Reformat, sprich Wasserstoff und Kohlendioxid, auf.

An einem unteren Ende des Aufbereitungskanals 28 ist ein Kondensatbecken 31 angeordnet. Das Kondensatbecken 31 weist einen Einlass 32 zum Zuführen von gasförmigem Reformat sowie einen Auslass 33 zum Abführen von kondensierter Methanollösung auf.

Weiterhin ist in dem Kanal 28 ein mit Waschwasser getränkter Docht 34 angeordnet. Der Kanal 28 kann außenseitig mit Wärmetauschern 35 und einem Lüfter 36 versehen sein, um den gesamten Kanal 28 zu kühlen.

Der Auslass 30 zum Abführen des aufbereiteten Reformats ist über einen Leitungsabschnitt 37 mit einem Anodeneinlass 3 des Brennstoffzellenstapels 2 verbunden.

Die Kondensation in der Wascheinrichtung erfolgt durch den Docht 34 welcher mit Waschlösung bzw. Waschwasser in Kontakt gebracht wird, wobei die Gasphase am dem benetzen Fasern des Dochtes entlang fliest. Dieses Verfahren der Kondensation wird vorteilhafterweise durch die Wärmetauscher 35 der Kondensationseinrichtung gekühlt, da die Kondensationswärme die Waschlösung aufheizt und somit die Partialdampfdrücke von Brennstoff (Methanol) und Wasser erhöht. Die Vorrichtung weist daher einen gekühlten Aufbereitungskanal auf, der über den Lüfter 36 gekühlt wird.

Weiterhin ist eine Kathodenlufteinrichtung 38 vorgesehen, die über einen Leitungsabschnitt 39 mit dem Kathodeneinlass 5 verbunden ist, um der Kathode des Brennstoffzellenstapels 2 Luft zuzuführen.

Der Kathodenauslass 6 ist über einen Leitungsabschnitt 40 mit einem Wärmetauscher 41 verbunden, um aus der Kathode herausströmende Abgasluft zu kühlen. Auf diese Weise kann Produktwasser auskondensiert werden. Die Wärmetauscher 41 weist einen Leitungsabschnitt 42 auf, der mit der Reformataufbereitungseinrichtung 49 verbunden ist, um dieser das Kondensat zuzuführen sowie einen Auslass 43 zum Abführen von Abgas. In den Leitungsabschnitt 42 kann eine Pumpe 48 integriert sein.

Die Reformataufbereitungseinrichtung 49 ist über einen Leitungsabschnitt 44 mit der Befeuchtungseinheit 9 verbunden, um dieser die darin auskondensierte Methanollösung zuzuführen. Weiterhin ist der Anodenauslass 4 über einen Leitungsabschnitt 45 mit dem Einlass 11 der Befeuchtungseinheit verbunden, um dieser ein Trägergas wie z.B. CO₂ zuzuführen. In den Leitungsabschnitt 45 kann eine Pumpe 62 integriert sein. Diese Pumpe übernimmt die Zirkulation im Anodenkreislauf.

Zudem kann in den Leitungsabschnitt 45 ein Auslass 68 integriert sein. Der Auslass 68 ist zum Abgeben von überschüssigem CO₂ vorgesehen, da CO₂ beim Betrieb der Brennstoffzelle permanent entsteht. Das CO₂ kann selbsttätig aufgrund einer Druckerhöhung entweichen. Mithilfe des Auslasses 68 bzw. dieses Auslassventils kann zudem der der Druck im Anodenkreislauf eingestellt werden.

Durch die einzelnen Leitungsabschnitte wird eine Kreislaufversorgung des Brennstoffzellensystems ausgebildet, da einzelne Medien, wie z.B. das Trägergas im Kreislauf geführt werden.

Weiterhin weist das Brennstoffzellensystem unter anderem einen Brennstofftank (nicht dargestellt), um der Befeuchtungseinheit Brennstoff bzw. Methanol über den Leitungsabschnitt 10 zuzuführen auf. Gasförmiges Fluid, auch Anodenfluid genannt, wird mittels der Pumpe 62 im Kreislauf, der als Anodenkreislauf bezeichnet wird, gefördert. Die Pumpe 62 kann auch an einer anderen geeigneten Stelle z.B. im Leitungsabschnitt 26, 27 oder 37 angeordnet sein. Gemäß dem Anodenkreislauf strömt das in der Anode 24 abgereicherte Anodenfluid aus einem Anodenauslass 4 der Brennstoffzelle und wird über einen Einlass 11 in die Befeuchtungseinheit geleitet. In der Befeuchtungseinheit 9 wird verbrauchter Brennstoff und Wasserdampf im Anodenfluid ersetzt. Das Anodenfluid strömt über einen Auslass 13 der Befeuchtungseinheit in die Reformereinrichtung 7, in die Aufbereitungseinrichtung 8 und anschließend in einen Anodenraum der Anode 24 der Brennstoffzelle 2, wo es durch die Brennstoffzellenreaktion wiederum abgereichert wird.

In den Einlass 11 der Befeuchtungseinheit 9 strömt also jenes Anodenfluid, das, nachdem es die Anode 24 der Brennstoffzelle passiert hat, nicht ausgestoßen wurde sondern im Anodenkreislauf verbleibt. Hingegen tritt aufgrund neu entstehenden Kohlendioxids überschüssig gewordenes Anodenfluid über den Auslass 68 aus dem Kreislauf aus.

Gemäß diesem und allen Folgenden Ausführungsbeispielen weist die Brennstoffzelle vorzugsweise eine Kühleinrichtung (nicht dargestellt) auf, um überschüssige Wärmeenergie abzuführen, die nicht über die Reformereinrichtung abgeführt werden kann.

Gemäß einem zweiten Ausführungsbeispiel, das im Wesentlichen dem ersten Ausführungsbeispiel entspricht, ist die Aufbereitungseinrichtung 8 als externe Nachreformiereinrichtung 50 ausgebildet, (Fig. 2).

Diese externe Nachreformiereinrichtung 50 kann z.B. einen Kupfer oder Edelmetallbasierten Katalysator aufweisen, der vorzugsweise zur Katalyse einer Dampfreformation ausgebildet ist.

Die Nachreformiereinrichtung wird über einen katalytischen Brenner (nicht dargestellt) erhitzt, der mit Anodenabgas welches noch Restwasserstoff enthält betrieben werden kann. Der katalytische Brenner kann zu diesem Zweck mit dem Auslass 68 verbunden sein.

Das aus dem Kathodenabgas auskondensierte Wasser wird gemäß diesem Ausführungsbeispiel über den Leitungsabschnitt 42 direkt zur Befeuchtungseinheit 9 mittels der Pumpe 48 gepumpt.

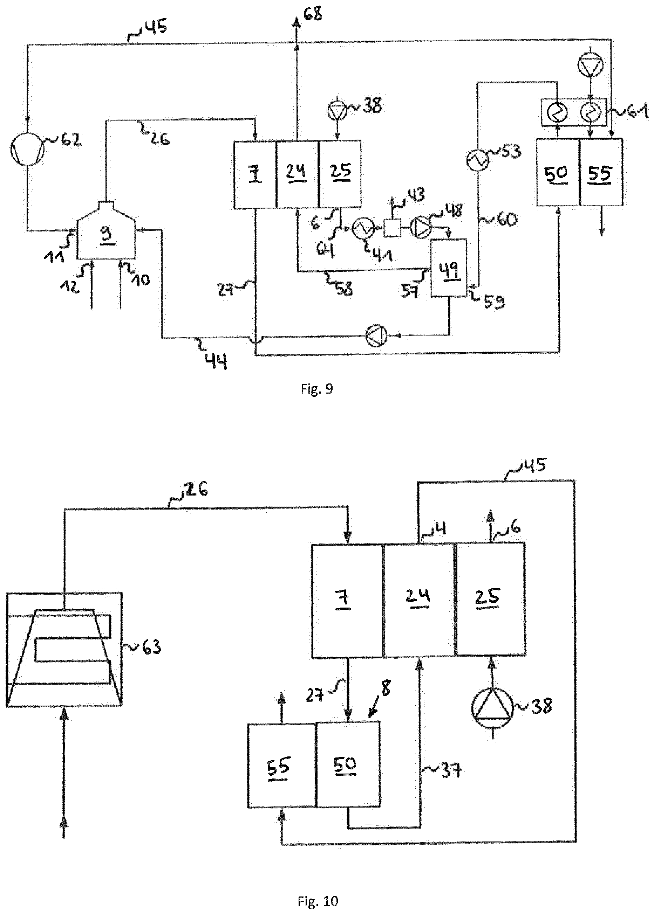

Gemäß einem dritten Ausführungsbeispiel des erfindungsgemäßen Brennstoffzellensystems, das sofern nichts anderes beschrieben ist, dem zweiten Ausführungsbeispiel entspricht sind eine externe Nachreformiereinrichtung 50 und eine der Nachreformiereinrichtung nachgeschaltete Reformataufbereitungseinrichtung 49 vorgesehen (Fig. 9).

Ein Auslass 57 der Reformataufbereitungseinrichtung 49 ist über einen Leitungsabschnitt 58 mit dem Anodeneinlass 3 verbunden. Ein Einlass 59 der Reformataufbereitungseinrichtung 49 ist über einen Leitungsabschnitt 60 mit der Nachreformiereinrichtung 50 verbunden.

Die Nachreformiereinrichtung 50 ist thermisch mit einem Katalytischen Brenner 55 gekoppelt, der die notwendig thermische Energie zum Betrieb der Nachreformiereinrichtung 50 bereitstellt.

Um die Wärmeleistung bzw. den Brennstoffbedarf des Katalytischen Brenners 55 für die Nachreformierung niedrig zu halten, kann eine Vorwärmung der dem Brenner 55 zugeführten Luft erfolgen. Diese Vorwärmung kann z.B. über einen Wärmeaustausch mittels einer Wärmetauscheranordnung 61 mit dem Reformat oder mit dem Abgas des Katalytischen Brenners erfolgen. Diese Vorwärmung ist vorteilhafterweise in das System aus Nachreformiereinrichtung und Katalytischem Brenner integriert.

Zudem ist im Leitungsabschnitt 60 eine Vorkondensationseinrichtung 53 mit einem Wärmetauscher zur Vorkondensation vorgesehen (Fig. 3a). Diese Vorkondensationseinrichtung ist ausgebildet, um Methanollösung aus dem Reformat auszukondensieren. Diese Methanollösung kann dann bspw. wieder der Befeuchtungseinheit zugeführt werden.

Die Vorkondensationseinrichtung 53 ist gemäß der Kondensationseinrichtung der Reformataufbereitungseinrichtung ausgebildet. Sie umfasst einen Einlass 71 zum Zuführen von Reformat, einen Kanal 72, der von einem Wärmetauscher 73 umgeben ist, in dem das Reformat gekühlt wird und der in ein Kondensatbecken 74 mündet. Zudem ist ein Auslass 75 vorgesehen, um den gasförmigen Brennstoff auszutragen und es ist ein Auslass 76 vorgesehen, um das Kondensat abzuführen.

Der Wärmetauscher 73 bzw. der Kondensator kann mit Luft gekühlt werden und/oder es kann vorgesehen sein eine Fläche des Wärmetauschers mit einer Flüssigkeit zu benetzten welche unter Zuführung eines Gases verdampft wird und dadurch das Reformat kühlt.

Die Phasentrennung erfolgt durch die Wascheinrichtung der Reformataufbereitungseinrichtung 49, wie bereits vorstehend beschrieben.

Der Kathodenauslass 6 ist gemäß diesem Ausführungsbeispiel über einen Leitungsabschnitt 64 mit der Reformataufbereitungseinrichtung 49 verbunden. Hierbei ist vorgesehen aus dem Kathodenabgas über einen Wärmetauscher 41 Wasser auszukondensieren, und dieses als Waschwasser der Reformataufbereitungseinrichtung bspw. mittels einer Pumpe zuzuführen. Zum Zuführen des Wassers ist eine Pumpe 48 vorgesehen. Das Abgas aus dem Kathodenauslass 6 wird über einen Auslass 43 an die Umgebung abgegeben.

Im Rahmen der vorliegenden Erfindung ist es auch möglich, die Nachreformiereinrichtung 50 und die Reformataufbereitungseinrichtung 49 in umgekehrter Reihenfolge anzuordnen.

Gemäß einem vierten Ausführungsbeispiel des erfindungsgemäßen Brennstoffzellensystems ist an Stelle der Befeuchtungseinheit eine Verdampfereinrichtung 63 vorgesehen (Fig. 10), die zum Bereitstellen von Wasser- und Brennstoffdampf aus einer Methanollösung ausgebildet ist. Ansonsten ist dieses Ausführungsbeispiel ähnlich dem zweiten Ausführungsbeispiel aufgebaut.

Unter Verdampfen wird eine Erwärmung einer Flüssigkeit auf oder über ihren Siedepunkt und ihr vollständiger Übergang in die Gasphase verstanden. Der Verdampfer beinhaltet also geeignete Heizvorrichtung welche genügend Wärmeleistung bereitstellen um eine Verdampfung zu erreichen. Der Dampf wird über den Siedepunkt erhitzt, um eine Kondensation, z.B. in Rohrleitungen, zu vermeiden und / oder die anschließenden Rohrleitungen werden erwärmt

Um die für die Wasserdampfreformierung notwendigen Edukte bereitzustellen (Wasser- und Brennstoffdampf), wird eine Brennstofflösung z.B. Methanollösung mittels der Verdampfereinrichtung derart über ihren Siedepunkt erhitzt, dass sie vollständig verdampft. Die Konzentration der Brennstofflösung richtet sich nach dem optimalen Wasser-Kohlenstoff-Verhältnis. Dieses ist bei Wasser und Methanol z.B. 1,2 bis 1,6 zu 1. Entsprechend des Verhältnisses sind die Mengenanteile in der Lösung vorgesehen. Um eine gleichmäßige Verdampfung zu erreichen, werden spezielle Einrichtungen, wie z.B. poröse Körper oder Kapillarröhrchen, verwendet. Die Verdampfereinrichtung 63 kann auch aus zwei Verdampfern bestehen, die Brennstoff und Wasser getrennt verdampfen. Bei gasförmigen Brennstoffen wird nur ein Verdampfer für Wasser benötigt.

Die Aufbereitungseinrichtung 8 ist gemäß diesem Ausführungsbeispiel als Nachreformiereinrichtung 50 ausgebildet.

Weiterhin ist der Anodenauslass 4 über einen Leitungsabschnitt 45 mit einem katalytischen Brenner 55, der Wärme für die Nachreformiereinrichtung bereitstellt, verbunden. Über diesen Leitungsabschnitt 45 wird dem katalytischen Brenner unverbrauchter Brennstoff aus dem Anodenraum unter Zugabe von Luft zugeführt, um diesen zu betreiben.

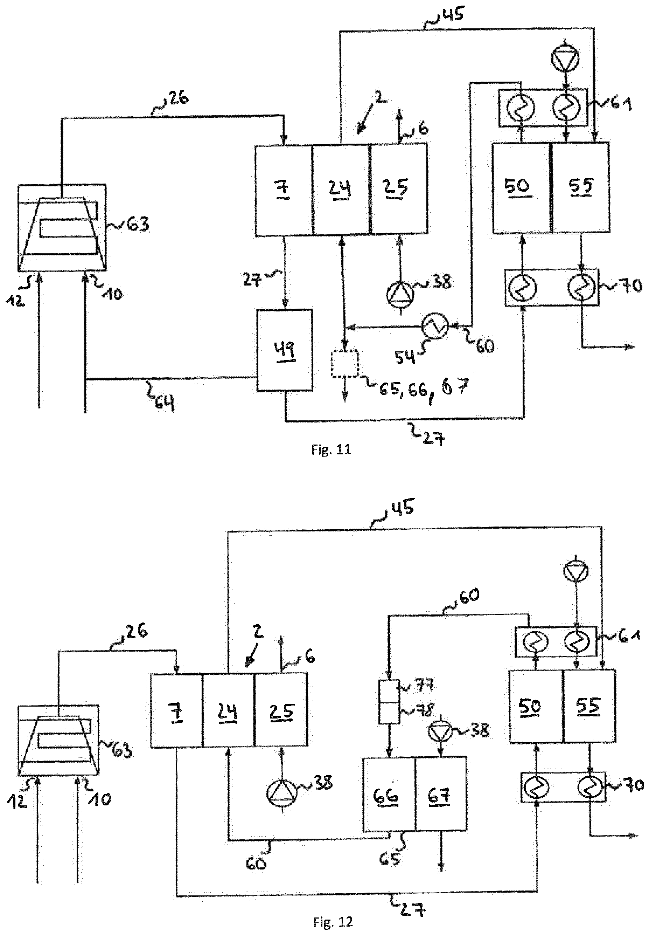

Gemäß einem fünften Ausführungsbeispiel des erfindungsgemäßen Brennstoffzellensystems ist, das im Wesentlichen dem vierten Ausführungsbeispiel entspricht, ist eine Reformataufbereitungseinrichtung 49 der Nachreformiereinrichtung 50 vorgeschaltet (Fig. 11).

Um die Wärmeleistung bzw. den Brennstoffbedarf des Katalytischen Brenners 55 für die Nachreformierung niedrig zu halten, kann eine Vorwärmung der Versorgungsluft gemäß dem dritten Ausführungsbeispiel erfolgen. Diese Vorwärmung kann z.B. über einen Wärmeaustausch mittels einer Wärmetauscheranordnung 61 mit dem Reformat oder mit dem Abgas des Katalytischen Brenners erfolgen. Diese Vorwärmung ist vorteilhafterweise in das System aus Nachreformiereinrichtung und Katalytischem Brenner integriert.

Eine Vorwärmung des aus der Reformataufbereitungseinrichtung 49 kommenden Reformatgases über eine weitere Wärmetauscheranordnung 70 ist ebenfalls vorgesehen.

Über die Reformataufbereitungseinrichtung 49 kann auskondensierte Brennstofflösung an die Verdampfereinrichtung 63 abgegeben werden

Zudem ist im Leitungsabschnitt 60 ein Wärmetauscher 54 angeordnet, um das Reformat zu kühlen.

Hierbei ist vorgesehen, dass ein Teilstrom von z.B. 50% des Reformats dem Anodenraum 66 der Niedertemperatur-Brennstoffzelle 65 zugeführt wird.

Gemäß einem sechsten Ausführungsbeispiel des erfindungsgemäßen Brennstoffzellensystems, das ähnlich dem vierten Ausführungsbeispiel ausgebildet ist, ist eine weitere Brennstoffzelle 65 der Nachreformiereinrichtung 50 vorgeschaltet (Fig. 12).

Diese Brennstoffzelle ist nicht thermisch mit dem Reformer gekoppelt und ist vorzugsweise als Niedertemperatur Brennstoffzelle ausgebildet. In dieser Brennstoffzelle 65 wird Wasserstoff aus dem Reformatgas abgereichert.

Weiterhin sind in den Leitungsabschnitt zwischen der Nachreformiereinrichtung 50 und der Brennstoffzelle 65 eine Hochtemperatur-Shiftstufe 77 und eine Niedertemperatur-Shiftstufe 78 integriert. Diese sind ebenso wie die in der DE 101 267 54 B4 beschriebenen Shiftstufen ausgeführt, und somit zum Entfernen von Kohlenmonoxid aus dem Medienstrom ausgebildet, um den Anoden-Katalysator der Brennstoffzelle 65 vor Kohlenmonoxid-Adsorption zu schützen. Zwischen den Shiftstufen können weitere Kühlstufen zur Temperaturerniedrigung des Reformatgases angeordnet sein.

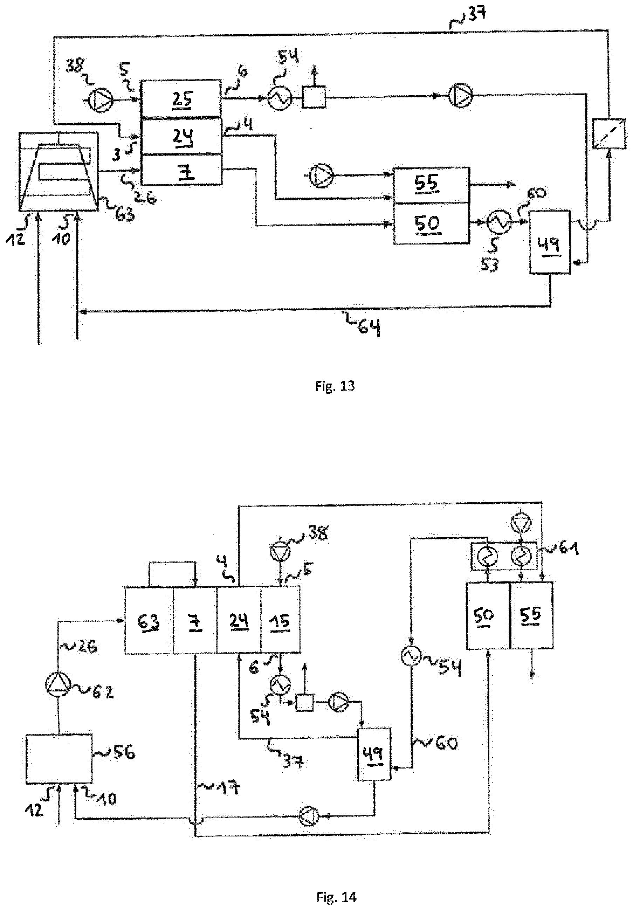

Gemäß einem siebten Ausführungsbeispiel des erfindungsgemäßen Brennstoffzellensystems, das ähnlich dem fünften Ausführungsbeispiel ausgebildet ist, sind die Nachreformiereinrichtung 50 und die Reformataufbereitungseinrichtung 49 in umgekehrter Reihenfolge angeordnet (Figur 13). Dabei ist somit die Reformataufbereitungseinrichtung mit Wascheinrichtung der Nachreformiereinrichtung 50 nachgeschaltet. Durch diese Anordnung kann eine besonders effiziente Reinigung erfolgen bzw. das Reformat enthält besonders geringe Mengen an nicht reformierten Brennstoff.

Gemäß einem achten Ausführungsbeispiel, der eine Sonderform der Verdampfung darstellt, ist die Integration der Verdampfereinheit in den Brennstoffzellenstapel 2 oder zumindest eine direkte thermische Kopplung von Brennstoffzellenstapel und Verdampfereinrichtung 63 vorgesehen. Bei dieser Form wird mittels der Abwärme des Brennstoffzellenstapels 2 die Brennstofflösung verdampft. Dies kann baulich umgesetzt werden, indem im Brennstoffzellenstapel ein separater Raum oder Kanäle vorgesehen sind, in die die Lösung eingeleitet und verdampft wird. Dieser Raum kann z.B. jeweils zwischen den Zellen angeordnet sein oder in Kanälen, die senkrecht zum Brennstoffzellenstapel verlaufen.

Weiterhin ist gemäß diesem Ausführungsbeispiel eine Phasentrennung zum Erzeugen von Waschwasser aus dem Kathodenabgas vorgesehen, wie sie z.B. im dritten Ausführungsbeispiel beschrieben ist, um das auskondensierte Wasser als Waschwasser der Reformataufbereitungseinrichtung zuzuführen.

Im Folgenden werden weitere Ausführungsformen der Reformereinrichtung beschrieben.

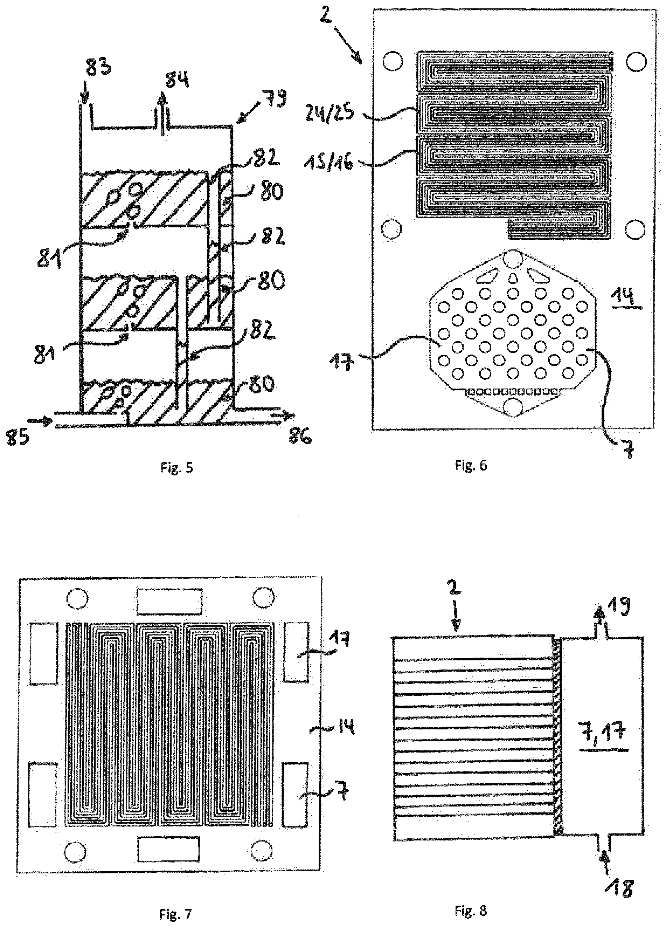

In einer weiteren Ausführungsform kann die Reformereinrichtung neben den Zellen des Brennstoffzellenstapels 2 angeordnet sein (Fig. 6). Hierfür ist auf einer Versorgungsplatte 14 bzw. einer Separatorplatte, auf denen die Versorgungskanäle 15, 16 für die Brennstoffzellenelektroden angeordnet sind, ein Raum für den Reformerkatalysator 17 vorgesehen. Dieser Raum 17 kann neben oder um den Versorgungskanal 15, 16 herum angeordnet sein.

In einer weiteren Ausführungsform können in den Versorgungsplatten 14 senkrecht angeordnete Kanäle 17 ausgebildet sein, die sich durch einen Teil oder durch alle Separatorplatten erstrecken und den Reformerraum 17 ausbilden (Fig. 7). Diese Kanäle enthalten Reformerkatalysator. Im Falle dass der Reformer elektrisch leitfähig ist müssen die Kanäle elektrisch gegenüber den Versorgungsplatten 14 isoliert werden. Eine derartige Reformereinrichtung 7 wird über einen Einlass in der Endplatte und eine Verteilerstruktur mit Brennstoffdampf versorgt (nicht dargestellt).

In einer weiteren Ausführungsform kann der Reformer einen Einlass 18, einen Reformerraum 17, der Reformerkatalysator enthält, und einen Auslass 19 umfassen. Hierbei kann die Reformereinrichtung 7 derart nah am Brennstoffzellenstapel 2 angeordnet sein oder diesen mit einer großen Fläche kontaktieren, so dass genügend Abwärme vom Brennstoffzellenstapel auf den Reformer übertragen wird (Fig. 8). Gemäß dieser Ausführungsform ist insbesondere vorteilhaft, wenn zwischen Brennstoffzellenstapel und Reformer ein wärmeleitfähiges Material angeordnet ist. Hierfür kann beispielsweise eine wärmeleitende Folie vorgesehen sein. Diese sollte vorzugsweise elektrisch isolierend ausgebildet sein, um einen Kurzschluss zwischen einzelnen Versorgungsplatten zu vermeiden. Vorteilhafterweise ist der Reformerraum mindestens an zwei gegenüberliegenden Seiten des Brennstoffzellenstapels angeordnet (nicht dargestellt). Bei einer derart gekoppelten Reformereinrichtung kann es ggf. erforderlich sein zusätzlich extern eine bestimmte Wärmemenge zuzuführen.

Die Reformataufbereitungseinrichtung kann an Stelle des mit Waschwasser getränkten Dochtes oder Fleeces 34 auch eine Trägerstruktur aufweisen. Die Trägerstruktur sollte eine große Oberfläche aufweisen und das Waschwasser muss über die Trägerstruktur abfließen können. Dies kann mittels eines Bandes, das auf einer abfallenden Mäanderstruktur aufgebracht ist, realisiert werden. Das Band kann an geeigneten Stellen Löcher aufweisen, durch die das Trägergas strömt und somit eine Strömung von Waschwasser und Gas im Gegenstrom ermöglicht. Als Trägerstruktur können auch Metallbleche oder Gitter verwendet werden, die in vorteilhafterweise mit einem Metallgehäuse verbunden sind, um diese zu kühlen.

Auch ein Behälter mit Füllkörper oder Packungen können eingesetzt werden in den Waschwasser im Gegenstrom zum Anodenfluidstrom strömt. Hierbei ist zu wiederum zu beachten, dass der Kontakt zwischen Gasphase und Waschwasser hoch ist.

Eine Wascheinrichtung 79 kann auch mehrere übereinander angeordnete Waschwasserbecken 80 aufweisen, die über Öffnungen 81 und Leitungsabschnitte 82 kommunizierend miteinander verbunden sind (Figur 5).

In einen oberen Bereich weist die Wascheinrichtung eine Zuleitung 83 zum Zuführen von Waschwasser, bspw. Kathodenkondensat, und einen Auslass 84 zum Abführen von aufbereitetem Reformat, sprich Wasserstoff und Kohlendioxid, auf.

In einen unteren Bereich weist die Wascheinrichtung einen Einlass 85 zum Zuführen von gasförmigem Reformat sowie einen Auslass 86 zum Abführen von Methanollösung auf.

Über die Öffnungen 81 strömt das Reformat von einem unteren Becken in das nächst höhere Becken hin zum Auslass 84 und wird durch das Waschwasser gewaschen. Über die Leitungsabschnitte wird das Waschwasser in den Waschwasserbecken 80 ersetzt.

Der Auslass 84 zum Abführen des aufbereiteten Reformats kann mit einem Anodeneinlass 3 des Brennstoffzellenstapels 2 verbunden sein.

Wie beschrieben wird bei einer Methanolreformation üblicherweise eine Dampfreformierung angewendet. In einem Temperaturbereich bis etwa 300 °C können hierfür Katalysatoren wie z.B. Kupfer-Zinkoxid, Kupfer-Zinkoxid-Aluminium, Kupfer-Cer-Aluminium, Kupfer-Zinkoxid-Titan, Kupfer-Chrom, Kupfer-Zirkonium eingesetzt werden.

Robustere Katalysatoren sind Edelmetallkatalysatoren z.B. auf Palladiumbasis (z.B. Palladium-Zinkoxid) oder Platinbasis. Diese Katalysatoren haben allerdings in der Regel höhere Betriebstemperaturen z.B. 250 - 400 °C. Die Reformereinrichtung kann auch verschiedene Katalysatorsysteme enthalten z.B. einen auf Edelmetall basierten und einen auf Kupfer basierten Katalysator.

Mehrwertige Kohlenwasserstoffe, wie z.B. Ethanol, benötigen zur Reformierung höhere Temperaturen z.B. 300 - 400 °C. Dabei können z.B. Nickel basierte Katalysatoren verwendet werden oder z.B. bei einer Wasserdampfreformierung bei Methan auch Reformertemperaturen über 600°C mit einem Nickel oder Platinkatalysator. Für eine Reformierung bei diesen Temperaturen müsste z.B. eine Festoxidbrennstoffzelle (Betriebstemperaturen von ca. 650 -1000°C) als Wärmequelle verwendet werden, was grundsätzlich auch möglich aber nicht bevorzugt ist.

Als nachgeschaltete externe Reformierung zum Abbau von nicht umgesetzten Brennstoff kann auch eine partielle Oxidation eingesetzt werden. Bei dieser Reformierungsform wird Brennstoff zusammen mit Luftsauerstoff dem Reformer zugeführt werden.

Grundsätzlich können erfindungsgemäß alle Elektrolytmembransysteme verwendet werden, deren Betriebstemperaturen zur Betriebstemperatur des Reformers passen.

Für die hierin beschriebenen Systeme können jedoch auch andere Brennstoffzellentypen bzw. Elektrolyten verwendet werden, die in einem Temperaturbereich zwischen 140°C und 230°C arbeiten, wie zum Beispiel Elektrolytsysteme, die auf Borphosphat und PTFE, z.B. BPO₄-H3PO₄-PTFE, oder auf Polyphosphaten oder auf anorganischen ionischen Leitern basieren.

**Bezugszeichenliste:**

| | | | |
|---|---|---|---|
| 1 | Brennstoffzellensystem | 52 | Einlass |
| 2 | Brennstoffzellenstapel | 53 | Vorkondensationseinrichtung |
| 3 | Anodeneinlass | 54 | Wärmetauscher/Kühleinrichtung |
| 4 | Anodenauslass | 55 | Katalytischer Brenner |
| 5 | Kathodeneinlass | 56 | |
| 6 | Kathodenauslass | 57 | Einlass Nachreformiereinrichtung |
| 7 | Reformereinrichtung | 58 | Leitungsabschnitt |
| 8 | Aufbereitungseinrichtung | 59 | Auslass Nachreformiereinrichtung |
| 9 | Befeuchtungseinheit | 60 | Leitungsabschnitt |
| 10 | Einlassbrennstoff | 61 | Wärmetauscheranordnung |
| 11 | Einlass Trägergas | 62 | Pumpe |
| 12 | Einlass Wasser | 63 | Verdampfereinrichtung |
| 13 | Auslass gasförmiger Brennstoff | 64 | Leitungsabschnitt |
| 14 | Versorgungsplatte | 65 | Niedertemperatur-Brennstoffzelle |
| 15 | Flowfield-Anode | 66 | Anode |
| 16 | Flowfield-Kathode | 67 | Kathode |
| 17 | Reformerraum | 68 | Auslass |
| 18 | Einlass Reformerraum | 69 | Katbrennerluftpumpe |
| 19 | Auslass Reformerraum | 70 | Wärmetauscheranordnung |
| 20 | Sperre | 71 | Einlass |
| 21 | Zylindrischer Körper | 72 | Kanal |
| 22 | Nut | 73 | Wärmetauscher |
| 23 | Dichtungselement | 74 | Kondensatbecken |
| 24 | Anode | 75 | Auslass |
| 25 | Kathode | 76 | Auslass |
| 26 | Leitungsabschnitt | 77 | HT-Shiftstufe |
| 27 | Leitungsabschnitt | 78 | NT-Shiftstufe |
| 28 | Aufbereitungskanal | 79 | Wascheinrichtung |
| 29 | Zuleitung | 80 | Waschwasserbecken |
| 30 | Auslass | 81 | Öffnungen |
| 31 | Kondensatbecken | 83 | Leitungsabschnitt |
| 32 | Einlass | 84 | Auslass |
| 33 | Auslass | 85 | Einlass |
| 34 | Docht | 86 | Auslass |
| 35 | Wärmetauscher | | |
| 36 | Lüfter | | |
| 37 | Leitungsabschnitt | | |
| 38 | Kathodenlufteinrichtung | | |
| 39 | Leitungsabschnitt | | |
| 40 | Leitungsabschnitt | | |
| 41 | Wärmetauscher | | |
| 42 | Leitungsabschnitt | | |
| 43 | Auslass | | |
| 44 | Leitungsabschnitt | | |
| 45 | Leitungsabschnitt | | |
| 46 | Leitungsabschnitt | | |
| 48 | Pumpe | | |
| 49 | Reformataufbereitungseinrichtung | | |
| 50 | Nachreformiereinrichtung | | |
| 51 | Leitungsabschnitt | | |

## Patentansprüche

1. Brennstoffzellensystem zur thermisch gekoppelten Reformierung mit Reformataufbereitung umfassend
einen Brennstoffzellenstapel (2) mit einem Anodeneinlass (3), einem Anodenauslass (4), einem Kathodeneinlass (5) und eine Kathodenauslass (6), und
eine mit dem Brennstoffzellenstapel thermisch gekoppelte Reformereinrichtung (7) zur Dampfreformierung zum Bereitstellen eines Anodenfluids, das reformierten Brennstoff umfasst, die dem Anodeneinlass (3) vorgeschaltet ist,
**dadurch gekennzeichnet,**
**dass** der Brennstoffzellenstapel (2) und die Reformereinrichtung (7) derart thermisch gekoppelt sind, dass die Abwärme des Brennstoffzellenstapels (2) mittels Wärmeleitung auf die Reformereinrichtung (7) derart übertragen wird, und zumindest teilweise zum Betrieb der Reformereinrichtung genutzt wird, und
wobei zumindest eine zwischen der Reformereinrichtung (7) und dem Anodeneinlass (3) angeordnete Aufbereitungseinrichtung (8, 49, 50) zum Entfernen und/oder Reformieren von nicht reformiertem Brennstoff und/oder für den Brennstoffzellenstapel (2) schädlichen Stoffen aus dem Anodenfluid vorgesehen ist, wobei eine Betriebstemperatur des Brennstoffzellenstapels (2) im Bereich zwischen 140°C und 230°C liegt.

2. Brennstoffzellensystem gemäß Anspruch 1,
**dadurch gekennzeichnet,**
**dass** die Temperatur bei der thermisch gekoppelten Dampfreformierung in etwa im Bereich des Temperaturniveaus der Brennstoffzelle liegt.

3. Brennstoffzellensystem gemäß Anspruch 1 oder 2,
**dadurch gekennzeichnet,**
**dass** der Reformer aus einem Methanol-/Wasserdampf-Gemisch ein wasserstoffreiches Gas erzeugt.

4. Brennstoffzellensystem gemäß einem der Ansprüche 1 bis 3,
**dadurch gekennzeichnet,**
**dass** die Aufbereitungseinrichtung (8) eine Reformataufbereitungseinrichtung (49) ist, die derart ausgebildet ist, dass nicht reformierter Brennstoff und/oder schädliche Stoffe mittels Kondensation aus dem Anodenfluid entfernbar sind, wobei die Reformataufbereitungseinrichtung eine Kondensationseinrichtung mit Wärmetauscher (35) umfasst, und die Kondensationseinrichtung derart ausgebildet ist, dass nicht umgesetzter Brennstoff die Kondensationseinrichtung kontaktiert.

5. Brennstoffzellensystem gemäß einem der Ansprüche 1 bis 4,
**dadurch gekennzeichnet,**
**dass** die Aufbereitungseinrichtung (8) eine Reformataufbereitungseinrichtung (49) ist, die eine Wascheinrichtung (34) umfasst, die einen Körper (31) aufweist, dessen Oberfläche mit Wasser benetzt ist, wobei nicht umgesetzter Brennstoff die Oberfläche des Körpers (31) kontaktiert und dadurch am Wasser kondensiert und mit dem Wasser eine Brennstofflösung ausbildet, wobei der Körper (31) als eine mit Wasser benetzte oder getränkte Wärmetauscherfläche oder als ein Docht oder als ein Gewebe oder als ein hydrophiler Füllkörper oder als ein poröser rohrförmiger Körper oder als ein hydrophiler rohrförmiger Körper ausgebildet ist.

6. Brennstoffzellensystem gemäß einem der Ansprüche 1 bis 5,
**dadurch gekennzeichnet,**
**dass** die Aufbereitungseinrichtung (8) eine Nachreformiereinrichtung (50) ist, die als externer Reformer zum Reformieren von nicht reformiertem Brennstoff ausgebildet ist und/oder dass die Aufbereitungseinrichtung (8) eine Reformataufbereitungseinrichtung (49) und eine Nachreformiereinrichtung (50) umfasst.

7. Brennstoffzellensystem gemäß einem der Ansprüche 1 bis 6,
**dadurch gekennzeichnet,**
**dass** eine Rückführungseinrichtung vorgesehen ist, um nicht aufbereiteten Brennstoff von der Aufbereitungseinrichtung (8) zur Reformereinrichtung zurückzuführen.

8. Brennstoffzellensystem gemäß einem der Ansprüche 1 bis 7,
**dadurch gekennzeichnet,**
**dass** eine Befeuchtungseinheit (9) vorgesehen ist, die zum Bereitstellen eines Brennstoff und Wasserdampf enthaltenden Trägergases zur Versorgung des Brennstoffzellenstapels (2) ausgebildet ist.

9. Brennstoffzellensystem gemäß einem der Ansprüche 1 bis 8,
**dadurch gekennzeichnet,**
**dass** eine Verdampfereinrichtung (63) vorgesehen ist, die zum Bereitstellen von Wasser- und Brennstoffdampf aus einer Brennstofflösung, wie z.B. einer Methanollösung, ausgebildet ist.

10. Brennstoffzellensystem gemäß einem der Ansprüche 1 bis 9,
**dadurch gekennzeichnet,**
**dass** die Nachreformiereinrichtung (50) der Reformataufbereitungseinrichtung (49) vor- oder nachgeschaltet ist.

11. Brennstoffzellensystem gemäß einem der Ansprüche 1 bis 10,
**dadurch gekennzeichnet,**
**dass** ein katalytischer Brenner (55) zum Betreiben der Nachreformiereinrichtung (50) vorgesehen ist, der zumindest teilweise mit nicht umgesetztem Brennstoff aus dem Anodenauslass (4) betreibbar ist.

12. Brennstoffzellensystem gemäß einem der Ansprüche 1 bis 11,
**dadurch gekennzeichnet,**
**dass** eine Vorkondensationseinrichtung (53) der Aufbereitungseinrichtung (8), d.h. der Reformataufbereitungseinrichtung (49) und/oder der Nachreformiereinrichtung (50) vor- und/oder nachgeschaltet ist oder zwischen diesen beiden angeordnet ist.

13. Verfahren zur internen thermisch gekoppelten Reformierung mit Reformataufbereitung mit einem Brennstoffzellensystem gemäß einem der Ansprüche 1 bis 12, bei dem eine Reformereinrichtung (7) thermisch mit einem Brennstoffzellenstapel (2) gekoppelt ist, wobei die Reformereinrichtung (7) über die Abwärme des Brennstoffzellenstapels (2) beheizt wird, und über einen Auslass (19) der Reformereinrichtung (7) ein Anodenfluid einer Aufbereitungseinrichtung (8) zugeführt wird, in der nicht reformierter Brennstoff aus dem Reformat entfernt wird und/oder nicht reformierter Brennstoff reformiert wird und anschließend dem Brennstoffzellenstapel (2) zugeführt wird, wobei eine Betriebstemperatur des Brennstoffzellenstapels (2) im Bereich zwischen 140°C und 230°C liegt.

14. Verfahren gemäß Anspruch 13,
**dadurch gekennzeichnet,**
**dass** aus dem Anodenfluid in der Aufbereitungseinrichtung (8), die eine Reformataufbereitungseinrichtung (49) umfasst, nicht reformierter Brennstoff und/oder schädliche Stoffe zumindest mittels Kondensation und/oder Waschung aus dem Reformat entfernt werden und/oder dass in dem Anodenfluid enthaltener, nicht reformierter Brennstoff in der Aufbereitungseinrichtung (8), die eine Nachreformiereinrichtung (50) umfasst, reformiert wird.

15. Verfahren gemäß einem der Ansprüche 13 bis 14,
**dadurch gekennzeichnet,**
**dass** das Anodenfluid eine Reformataufbereitungseinrichtung (49) und eine Nachreformiereinrichtung (50) durchläuft oder umgekehrt.

## Claims

1. A fuel cell system for thermally coupled reforming with reformate preparation, including a fuel cell stack (2) having an anode inlet (3), an anode outlet (4), a cathode inlet (5), and a cathode outlet (6), and
reformer unit (7), which is thermally coupled to the fuel cell stack and is for steam reforming for preparing an anode liquid containing reformed fuel and which is connected upstream of the anode inlet (3),
**characterized in that**,
that the fuel cell stack (2) and the reformer unit (7) are coupled thermally in a way that the waste heat of the fuel cell stack passes to the reformer unit (7) by means of thermal conduction, and is at least partly used to operate the reformer unit, and
that at least one preparation unit (8, 49, 50) is provided, which is positioned between the reformer unit (7) and the anode inlet (3) in order to remove and/or reform unreformed fuel and/or substances that are harmful to the fuel cell stack (2) from the anode liquid, wherein an operating temperature of the a fuel cell stack (2) lies in the range between 140 °C and 230 °C.

2. The fuel cell system according to claim 1,
**characterized in that**
the temperature in the thermally coupled steam reforming lies approximately in the range of the temperature level of the fuel cell.

3. The fuel cell system according to claim 1 or 2,
**characterized in that**
the reformer produces a hydrogen-rich gas from a methanol-steam mixture.

4. The fuel cell system according to one of claims 1 through 3,
**characterized in that**
the preparation unit (8) is a reformate preparation unit (49), which is embodied in such a way that unreformed fuel and/or harmful substances can be removed from the anode liquid by means of condensation; the reformate preparation unit includes a condensation unit with a heat exchanger (35) and the condensation unit is embodied so that unconverted fuel comes into contact with the condensation unit.

5. The fuel cell system according to one of claims 1 through 4,
**characterized in that**
the preparation unit (8) is a reformate preparation unit (49), which includes a washing unit (34), which has a body (31) whose surface is wetted with water; unconverted fuel contacts the surface of the body (31) and as a result, condenses on the water and together with the water forms a fuel solution; and the body (31) is embodied in the form of a heat exchanger surface, or in the form of a wick, or in the form of a woven, or in the form of a hydrophilic filler, or in the form of a porous tubular body, or or in the form of a hydrophilic tubular body that is wetted or soaked with water.

6. The fuel cell system according to one of claims 1 through 5,
**characterized in that**
the preparation unit (8) is a post-reformer unit (50) that is embodied as an external reformer for reforming unreformed fuel and/or that
the preparation unit (8) includes a reformate preparation unit (49) and a post-reformer unit (50).

7. The fuel cell system according to one of claims 1 through 6,
**characterized in that**
a return device in order to return unprepared fuel from the preparation unit (8) to the reformer unit.

8. The fuel cell system according to one of claims 1 through 7,
**characterized in that**
a humidifying unit (9) is provided, which is embodied to produce a fuel- and steam-containing carrier gas for supplying the fuel cell stack (2).

9. The fuel cell system according to one of claims 1 through 8,
**characterized in that**
an evaporator unit (63) is provided that is embodied to produce steam and fuel vapor from a fuel solution, e.g. from a methanol solution.

10. The fuel cell system according to one of claims 1 through 9,
**characterized in that**
the post-reformer unit (50) is connected upstream or downstream of the reformate preparation unit (49).

11. The fuel cell system according to claim 1 through 10,
**characterized in that**
a catalytic burner (55) is provided to operate the post-reformer unit (50), which can be at least partially operated with unconverted fuel from the anode outlet (4).

12. The fuel cell system according to claim 1 through 11,
**characterized in that**
a precondensation unit (53) is connected upstream or downstream of the preparation unit (8), i.e. of the reformate preparation unit (49) and/or of the post-reformer unit (50) or is positioned between them.

13. A method for internal thermally coupled reforming with reformate preparation, with a fuel cell system according to one of claims 1 through 12, in which a reformer unit (7) is thermally coupled to a fuel cell stack (2); the reformer unit (7) is heated by means of the waste heat of the fuel cell stack (2); and via an outlet (19) of the reformer unit (7), is supplied with an anode liquid of a preparation unit (8) in which unreformed fuel is removed from the reformate and/or non-reformed fuel is reformed and then supplied to the fuel cell stack (2), wherein an operating temperature of the a fuel cell stack (2) lies in the range between 140 °C and 230 °C.

14. The method according to claim 13,
**characterized in that**
from the anode liquid in the preparation unit (8), which includes a reformate preparation unit (49), unreformed fuel and/or harmful substances are removed from the reformate by means of condensation and/or washing and/or that
unreformed fuel contained in the anode liquid is reformed in the preparation unit (8), which includes a post-reformer unit (50).

15. The method according to one of claims 13 through 14,
**characterized in that**
the anode liquid passes through a reformate preparation unit (49) and a post-reformer unit (50) or vice versa.

## Revendications

1. Système de piles à combustible pour le reformage couplé thermiquement avec traitement du reformat, comprenant
un empilement de piles à combustible (2) ayant une entrée d'anode (3), une sortie d'anode (4), une entrée de cathode (5) et une sortie de cathode (6), et un dispositif reformeur (7) couplé thermiquement à l'empilement de piles à combustible et destiné au reformage à la vapeur, pour fournir un fluide anodique comprenant du combustible reformé, ledit dispositif reformer étant agencé en amont de l'entrée d'anode (3),
**caractérisé en ce que**
l'empilement de piles à combustible (2) et le dispositif reformeur (7) sont couplés thermiquement de manière à transférer la chaleur perdue de l'empilement de piles à combustible (2) au dispositif reformeur (7) par conduction thermique et à l'utiliser au moins partiellement pour faire fonctionner le dispositif reformeur, et
au moins un dispositif de traitement (8, 49, 50) agencé entre le dispositif reformeur (7) et l'entrée d'anode (3) et destiné à enlever et/ou reformer le combustible non reformé et/ou des substances nocives pour l'empilement de piles à combustible (2) provenant du fluide anodique, la température de fonctionnement de l'empilement de piles à combustible (2) étant dans la plage entre 140 °C et 230 ° C.

2. Système de piles à combustible selon la revendication 1,
**caractérisé en ce que**
la température lors du reformage à la vapeur couplé thermiquement est approximativement dans la plage du niveau de température de la pile à combustible.

3. Système de piles à combustible selon la revendication 1 ou 2,
**caractérisé en ce que**
le reformeur génère un gaz riche en hydrogène à partir d'un mélange de méthanol/vapeur d'eau.

4. Système de piles à combustible selon l'une des revendications 1 à 3, **caractérisé en ce que**
le dispositif de traitement (8) est un dispositif de traitement de reformat (49) qui est réalisé de telle sorte que le combustible non reformé et/ou des substances nocives peuvent être enlevés du fluide anodique, le dispositif de traitement de reformat comprenant un dispositif de condensation à échangeur de chaleur (35), et le dispositif de condensation est réalisé de telle sorte que le combustible n'ayant pas réagi vient en contact avec le dispositif de condensation.

5. Système de piles à combustible selon l'une des revendications 1 à 4, **caractérisé en ce que**
le dispositif de traitement (8) est un dispositif de traitement de reformat (49) qui comprend un moyen de lavage (34) comportant un corps (31) dont la surface est mouillée avec de l'eau, le combustible n'ayant pas réagi vient en contact avec la surface du corps (31) et se condense ainsi au contact de l'eau et forme une solution de combustible avec l'eau, le corps (31) étant réalisé sous forme de surface d'échange thermique, de mèche, de tissu mouillé(e) ou imbibé(e) d'eau, sous forme de corps de charge hydrophile, de corps tubulaire poreux ou de corps tubulaire hydrophile.

6. Système de piles à combustible selon l'une des revendications 1 à 5, **caractérisé en ce que**
le dispositif de traitement (8) est un dispositif de post-reformage (50) qui est réalisé sous forme de reformeur externe pour reformer du combustible non reformé, et/ou **en ce que**
le dispositif de traitement (8) comprend un dispositif de traitement de reformat (49) et un dispositif de post-reformage (50).

7. Système de piles à combustible selon l'une des revendications 1 à 6, **caractérisé en ce que**
il est prévu un dispositif de retour pour faire retourner du combustible non traité depuis le dispositif de traitement (8) vers le dispositif reformeur.

8. Système de piles à combustible selon l'une des revendications 1 à 7, **caractérisé en ce que**
il est prévu une unité de mouillage (9) qui est réalisée pour fournir un combustible et un gaz porteur contenant de la vapeur d'eau pour alimenter l'empilement de piles à combustible (2).

9. Système de piles à combustible selon l'une des revendications 1 à 8, **caractérisé en ce que**
il est prévu un dispositif évaporateur (63) qui est réalisé pour fournir de la vapeur d'eau et de combustible à partir d'une solution de combustible, comme par exemple une solution de méthanol.

10. Système de piles à combustible selon l'une des revendications 1 à 9, **caractérisé en ce que**
le dispositif de post-reformage (50) est agencé en amont ou en aval du dispositif de traitement de reformat (49).

11. Système de piles à combustible selon la revendication 1 à 10,
**caractérisé en ce que**
il est prévu un brûleur catalytique (55) pour faire fonctionner le dispositif de post-reformage (50), qui peut fonctionner au moins partiellement avec du combustible n'ayant pas réagi provenant de la sortie d'anode (4).

12. Système de piles à combustible selon la revendication 1 à 11,
**caractérisé en ce que**
un dispositif de pré-condensation (53) est agencé en amont et/ou en aval du dispositif de traitement (8), c'est-à-dire du dispositif de traitement de reformat (49) et/ou du dispositif de post-reformage (50).

13. Procédé pour le reformage interne couplé thermiquement avec traitement du reformat au moyen d'un système de piles à combustible selon l'une des revendications 1 à 12, dans lequel un dispositif de reformage (7) est couplé thermiquement à un empilement de piles à combustible (2), le dispositif de reformage (7) étant chauffé par la chaleur perdue de l'empilement de piles à combustible (2), et un fluide anodique est amené à un dispositif de traitement (8) via une sortie (19) du dispositif reformeur (7), dans lequel du combustible non reformé est enlevé du reformat et/ou du combustible non reformé est reformé et ensuite amené à l'empilement de piles à combustible (2), la température de fonctionnement de l'empilement de piles à combustible (2) étant dans la plage entre 140 °C et 230 ° C.

14. Procédé selon la revendication 13,
**caractérisé en ce que**
dans le fluide anodique dans le dispositif de traitement (8) qui comprend un dispositif de traitement de reformat (49), du combustible non reformé et/ou des substances nocives sont enlevés du reformat au moins par condensation et/ou par lavage, et/ou **en ce que**
du combustible non reformé contenu dans le fluide anodique est formé dans le dispositif de traitement (8) qui comprend un dispositif de post-reformage (50).

15. Procédé selon l'une des revendications 13 à 14,
**caractérisé en ce que**
le fluide anodique traverse un dispositif de traitement de reformat (49) et un dispositif de post-reformage (50), ou inversement.
